# EUROPEAN PATENT APPLICATION

(11) **EP 4 669 025 A1**
(43) Date of publication of application: **24.12.2025**
(21) Application number: 23921939.7
(22) Date of filing: 17.02.2023
(51) Int. Cl.: H04W 84/12, H04W 52/02, H02J 50/00

(54) **WIRELESS COMMUNICATION METHODS, AMBIENT POWER STATIONS AND AMBIENT POWER ACCESS POINTS**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2023/076663
(87) International publication number: WO 2024/168785

(57) **Abstract**

Provided in the embodiments of the present application are wireless communication methods, ambient power stations and ambient power access points, which can discover ambient power devices and/or provide stable power for the ambient power devices, thereby ensuring the communication accessibility of the ambient power devices. A wireless communication method comprises: an ambient power station receives a discovery signal on at least one preset channel; or, a wireless communication method comprises: an ambient power station receives an power supply signal on at least one preset channel.

## Description

### TECHNICAL FIELD

Embodiments of the present disclosure relate to the field of communications, and in particular, to wireless communication methods, ambient power stations, and ambient power access points.

### BACKGROUND

Ambient power (AMP) devices (e.g., an ambient power station (AMP STA) and/or an ambient power access point (AMP STA)) can be supported in a wireless local area network (WLAN) to achieve a low-power communication. Considering the capability and power consumption limitation of the ambient power device, how to discover the ambient power device, or how to provide stable power for the ambient power device, is a problem that needs to be solved.

### SUMMARY

Embodiments of the present disclosure provide wireless communication methods, ambient power stations, and ambient power access points, which may discover an ambient power device and/or provide stable power for the ambient power device, thereby ensuring the communication accessibility of the ambient power device.

In a first aspect, a wireless communication method is provided, and the method includes:
receiving, by an ambient power station, a discovery signal on at least one channel that is preset.

In a second aspect, a wireless communication method is provided, and the method includes:
transmitting, by an ambient power access point, a discovery signal to an ambient power station on at least one channel that is preset.

In a third aspect, a wireless communication method is provided, and the method includes:
receiving, by an ambient power station, a power supply signal on at least one channel that is preset.

In a fourth aspect, a wireless communication method is provided, and the method includes:
transmitting, by an ambient power access point, a power supply signal to an ambient power station on at least one channel that is preset.

In a fifth aspect, an ambient power station is provided, and configured to perform the method in the first aspect.

Specifically, the ambient power station includes a function module configured to perform the method in the first aspect.

In a sixth aspect, an ambient power access point is provided, and configured to perform the method in the second aspect.

Specifically, the ambient power access point includes a function module configured to perform the method in the second aspect.

In a seventh aspect, an ambient power station is provided, and configured to perform the method in the third aspect.

Specifically, the ambient power station includes a function module configured to perform the method in the third aspect.

In an eighth aspect, an ambient power access point is provided, and configured to perform the method in the fourth aspect.

Specifically, the ambient power access point includes a function module configured to perform the method in the fourth aspect.

In a ninth aspect, an ambient power station is provided, and includes a processor and a memory. The memory is configured to store a computer program, and the processor is configured to call the computer program stored in the memory and run the computer program, to enable the ambient power station to perform the method in the first aspect.

In a tenth aspect, an ambient power access point is provided, and includes a processor and a memory. The memory is configured to store a computer program, and the processor is configured to call the computer program stored in the memory and run the computer program, to enable the ambient power access point to perform the method in the second aspect.

In an eleventh aspect, an ambient power station is provided, and includes a processor and a memory. The memory is configured to store a computer program, and the processor is configured to call the computer program stored in the memory and run the computer program, to enable the ambient power station to perform the method in the third aspect.

In a twelfth aspect, an ambient power access point is provided, and includes a processor and a memory. The memory is configured to store a computer program, and the processor is configured to call the computer program stored in the memory and run the computer program, to enable the ambient power access point to perform the method in the fourth aspect.

In a thirteenth aspect, an apparatus is provided, and configured to implement the method in any one of the first aspect to fourth aspect.

Specifically, the apparatus includes a processor, and the processor is configured to call a computer program from a memory and run the computer program, to enable a device equipped with the apparatus to perform the method in any one of the first aspect to fourth aspect.

In a fourteenth aspect, a computer-readable storage medium is provided, and configured to store a computer program. The computer program enables a computer to perform the method in any one of the first aspect to fourth aspect.

In a fifteenth aspect, a computer program product is provided, and includes computer program instructions. The computer program instructions enable a computer to perform the method in any one of the first aspect to fourth aspect.

In a sixteenth aspect, a computer program is provided. The computer program, when run on a computer, enables the computer to perform the method in any one of the first aspect to fourth aspect.

Through the technical solutions of the first aspect and second aspect, the ambient power station receives the discovery signal on at least one channel that is preset, so that the ambient power access point may discover the ambient power station, which avoids blind detection of the discovery signal by the ambient power station on all channels, reduces delay of detecting the discovery signal, reduces power consumed by the ambient power station due to detecting the discovery signal, and thereby ensures communication accessibility of the ambient power station.

Through the technical solutions of the third aspect and fourth aspect, the ambient power station receives the power supply signal on at least one channel that is preset, which avoids blind detection of the power supply signal by the ambient power station on all channels, and thereby supplies power to the ambient power station more stably and efficiently, and ensures the communication accessibility of the ambient power station.

### BRIEF DESCRIPTION OF THE DRAWINGS

FIG. 1 is a schematic diagram of a communication system architecture to which embodiments of the present disclosure are applied.
FIG. 2 is a schematic diagram of a physical layer protocol data unit (PPDU) provided in the present disclosure.
FIG. 3 is a schematic diagram of a media access control (MAC) frame provided in the present disclosure.
FIG. 4 is a schematic flowchart of a wireless communication method provided in embodiments of the present disclosure.
FIG. 5 is a schematic diagram of a power supply signal based on on-off keying (OOK) modulation provided in embodiments of the present disclosure.
FIG. 6 is a schematic diagram of a radio frequency power source information element provided in embodiments of the present disclosure.
FIG. 7 is a schematic diagram showing a power supply signal, a discovery signal, and a beacon signal provided in embodiments of the present disclosure.
FIG. 8 is a schematic flowchart of a basic service set (BSS) scanning performed by an AMP STA provided in embodiments of the present disclosure.
FIG. 9 is a schematic flowchart of another BSS scanning performed by an AMP STA provided in embodiments of the present disclosure.
FIG. 10 is a schematic flowchart of another wireless communication method provided in embodiments of the present disclosure.
FIG. 11 is a schematic block diagram of an ambient power station provided in embodiments of the present disclosure.
FIG. 12 is a schematic block diagram of an ambient power access point provided in embodiments of the present disclosure.
FIG. 13 is a schematic block diagram of another ambient power station provided in embodiments of the present disclosure.
FIG. 14 is a schematic block diagram of another ambient power access point provided in embodiments of the present disclosure.
FIG. 15 is a schematic block diagram of a communication device provided in embodiments of the present disclosure.
FIG. 16 is a schematic block diagram of an apparatus provided in embodiments of the present disclosure.
FIG. 17 is a schematic block diagram of a communication system provided in embodiments of the present disclosure.

### DETTAILED DESCRIPTION

The technical solutions in the embodiments of the present disclosure will be described below in conjunction with the accompanying drawings in the embodiments of the present disclosure. Obviously, the described embodiments are merely some but not all embodiments of the present disclosure. With respect to the embodiments of the present disclosure, all other embodiments obtained by a person of ordinary skill in the art without paying creative efforts belong to the protection scope of the present disclosure.

The technical solutions in the embodiments of the present disclosure may be applied to various communication systems, such as a wireless local area network (WLAN) system, a wireless fidelity (WiFi) system, or other communication systems.

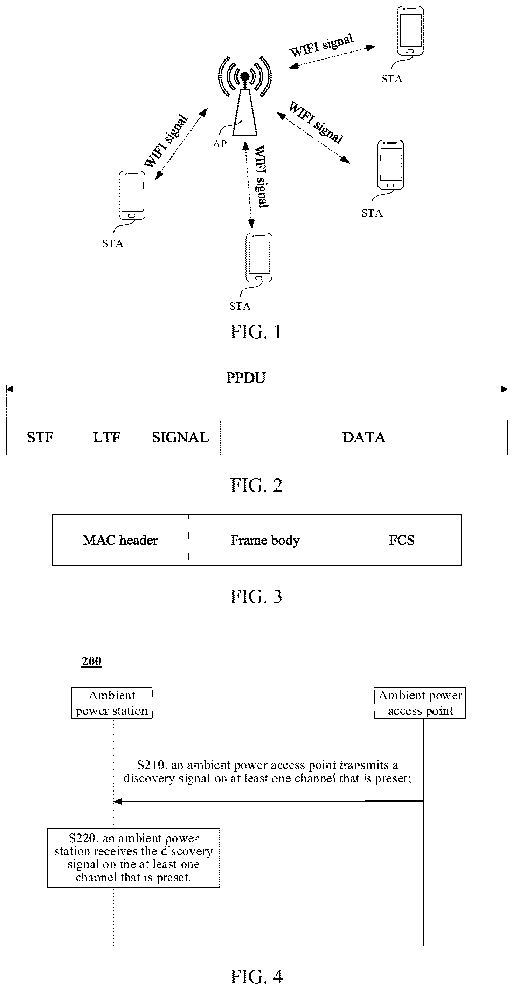

Referring to FIG. 1, it shows a schematic diagram of a wireless communication system provided in an embodiment of the present disclosure. As shown in FIG. 1, the wireless communication system may include an access point (AP) and stations (STAs).

In some scenarios, the AP may be referred to as an AP STA; that is, in a sense, the AP is also a STA. In some scenarios, the STA is referred to as a non-AP STA.

In some embodiments, the STAs may include AP STAs and non-AP STAs. The communication in the communication system may be a communication between an AP and a non-AP STA, a communication between non-AP STAs, or a communication between a STA and a peer STA. The peer STA may refer to a device that communicates with the STA in a peer-to-peer manner. For example, the peer STA may be an AP or a non-AP STA.

The AP is equivalent to a bridge for connecting a wired network and a wireless network, and has a main function of connecting various wireless network clients together and then connecting the wireless network to Ethernet. An AP device may be a terminal device (e.g., a mobile phone) with a wireless fidelity (WiFi) chip or a network device (e.g., a router).

It should be understood that a role of the STA in the communication system is not absolute. For example, in some scenarios, a mobile phone is a non-AP STA in a case where the mobile phone is connected to a router, and the mobile phone plays a role of an AP in a case where the mobile phone serves as a hotspot for other mobile phones.

The AP and the non-AP STA may be devices applied in the Internet of Vehicles, Internet of Things (IoT) nodes or sensors in the IoT, smart cameras, smart remote controls or smart water and electricity meters in smart homes, or sensors in smart cities.

In some embodiments, the non-AP STA may support 802.11be standard. The non-AP STA may also support various current and future (WLAN) standards of 802.11 family, such as 802.11ax, 802.11ac, 802.11n, 802.11g, 802.11b and 802.11a.

In some embodiments, the AP may be a device supporting 802.11be standard. The AP may also be a device that supports various current and future WLAN standards of 802.11 family, such as 802.1 1ax, 802.1 1ac, 802.11n, 802.11g, 802.11b and 802.11a.

In the embodiments of the present disclosure, the STA may be a mobile phone, a tablet computer, a computer, a virtual reality (VR) device, an augmented reality (AR) device, a wireless device in industrial control, a set-top box, a wireless device in self-driving, an in-vehicle communication device, a wireless device in remote medical, a wireless device in smart grid, a wireless device in transportation safety, a wireless device in smart city or in smart home, a wireless communication chip, an application specific integrated circuit (ASIC), or a system on chip (SOC), which support WLAN or WiFi technology.

Frequency bands that can be supported by the WLAN technology may include but are not limited to: low frequency bands (2.4 GHz, 5 GHz, and 6 GHz) and high frequency bands (45 GHz and 60 GHz).

There are one or more links between the station and the access point. In some embodiments, the station and the access point support a multi-band communication. For example, the station and the access point communicate simultaneously in frequency bands of 2.4 GHz, 5 GHz, 6 GHz, 45 GHz, and 60 GHz, or communicate simultaneously on different channels of a same frequency band (or different frequency bands), which improves the communication throughput and/or reliability between the devices. This type of devices are usually referred to as multi-band devices or multi-link devices (MLDs), or are sometimes referred to as multi-link entities or multi-band entities. The multi-link device may be an access point device or a station device. In the case where the multi-link device is the access point device, the multi-link device includes one or more APs; and in the case where the multi-link device is the station device, the multi-link device includes one or more non-AP STAs.

The multi-link device including one or more APs may be referred to as an access point multi-link device (AP MLD), and the multi-link device including one or more non-AP STAs may be referred to as a non-access point multi-link device (Non-AP MLD).

In the embodiments of the present disclosure, an AP may include a plurality of APs, a Non-AP may include a plurality of STAs, a plurality of links may be formed between the APs in the AP and the STAs in the Non-AP, and a data communication may be performed between an AP in the AP and a corresponding STA in the Non-AP via a corresponding link.

The AP is a device deployed in the WLAN to provide a wireless communication function for the STA. The STA may include: a user equipment (UE), an access terminal, a user unit, a user station, a mobile station, a mobile console, a remote station, a remote terminal, a mobile device, a wireless communication device, a user agent, or a user apparatus. Optionally, the STA may also be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an in-vehicle device, or a wearable device, which are not limited in the embodiments of the present disclosure.

Optionally, both the STA and the AP support the IEEE 802.11 standard.

It should be understood that the terms "system" and "network" are often used interchangeably herein. The term "and/or" used herein is only an association relationship for describing associated objects, which indicates that there may be three kinds of relationships. For example, A and/or B may represent three situations that: A exists alone, both A and B exist, and B exists alone. In addition, the character "/" used herein generally indicates that associated objects before and after the character "/" are in an "or" relationship.

The terms used in the implementations of the present disclosure are only used to explain specific embodiments of the present disclosure, and are not intended to limit the present disclosure. The terms such as "first", "second", "third", and "fourth" in the specification, claims and drawings of the present disclosure are used to distinguish different objects, rather than to describe a specific order. In addition, the terms "include/comprise" and "have", and any variations thereof, are intended to cover a non-exclusive inclusion.

It should be understood that the "indicate" mentioned in the embodiments of the present disclosure may be a direct indication or an indirect indication, or may represent that there is an association relationship. For example, A indicates B, which may mean that A directly indicates B (for example, B may be acquired by A), or that A indirectly indicates B (for example, A indicates C, and B may be acquired by C), or that there is an association relationship between A and B.

In the description of the embodiments of the present disclosure, the term "correspond" may mean that there is a direct correspondence or an indirect correspondence between the two, or may mean that there is an associated relationship between the two, or may mean a relationship of indicating and being indicated or a relationship of configuring and being configured.

In the embodiments of the present disclosure, "pre-defined" or "pre-configured" may be implemented by pre-storing corresponding codes, tables or other methods that may be used to indicate related information in devices (e.g., including a terminal device and a network device), and its specific implementation is not limited in the present disclosure. For example, "pre-defined" may refer to what is defined in the protocol.

In the embodiments of the present disclosure, the "protocol" may refer to a standard protocol in the field of communications, which may be, for example, an evolution of an existing LTE protocol, NR protocol or Wi-Fi protocol, or an evolution of a related protocol of other communication systems related thereto, which is not limited in the present disclosure.

With the increase in 5G industry applications, there are more and more types of connected objects and application scenarios, and there will be high requirements on the cost and power consumption of communication terminals. The application of passive IoT devices with battery-free and low-cost will become a key technology for cellular IoT, and the types and number of 5G network-connected terminals will be enriched to truly realize Internet of Everything. The passive IoT devices may be based on existing zero-power-consumption devices, i.e., based on radio frequency identification (RFID) technology, and extended on this basis to be suitable for cellular IoT.

In order to facilitate better understanding of the embodiments of the present disclosure, the classification of zero-power-consumption devices related to the present disclosure is described below.

Optionally, based on power sources and usage manners of the zero-power-consumption devices, the zero-power-consumption devices may be divided into passive zero-power-consumption devices, semi-passive zero-power-consumption devices and active zero-power-consumption devices.

### 1) Passive zero-power-consumption device

The zero-power-consumption device does not need a built-in battery. When the zero-power-consumption device approaches a network device (e.g., a reader/writer of a radio frequency identification (RFID) system), the zero-power-consumption device is located within a near-field range formed by radiation of an antenna of the network device. Therefore, the antenna of the zero-power-consumption device generates an induced current through electromagnetic induction, and the induced current drives a low-power chip circuit of the zero-power-consumption device. Thus, the signal demodulation of a forward link (a downlink, which is a link from the network device to the zero-power-consumption device) and the signal modulation of a backward link (an uplink, which is a link from the zero-power-consumption device to the network device) are realized. For a backscatter link, the zero-power-consumption device transmits signals in a backscatter manner.

It can be seen that the passive zero-power-consumption device does not need the built-in battery to drive either the forward link or the backward link, and is a true zero-power-consumption device.

The passive zero-power-consumption device does not need the battery, and a RF circuit and a baseband circuit are very simple. For example, the passive zero-power-consumption device does not need a low-noise amplifier (LNA), a power amplifier (PA), a crystal oscillator, an analog-to-digital conversion (ADC), and the like. Therefore, the passive zero-power-consumption device has many advantages such as small size, light weight, very low price, and long service life.

### 2) Semi-passive zero-power-consumption device

The semi-passive zero-power-consumption device itself is not installed with a conventional battery, but may use a radio frequency (RF) power harvesting module to harvest radio wave power, or use a solar power/light power/thermal power/kinetic power harvesting module to harvest power; and simultaneously, the semi-passive zero-power-consumption device stores the harvested power in an power storage unit (e.g., a capacitor). After obtaining power, the power storage unit may drive a low-power chip circuit of the zero-power-consumption device. Thus, the signal demodulation of the forward link and the signal modulation of the backward link are realized. For the backscatter link, the zero-power-consumption device transmits signals in the backscatter manner.

It can be seen that the semi-passive zero-power-consumption device does not need the built-in battery to drive either the forward link or the backward link. Although the power stored in the capacitor is used in operation, the power comes from the radio power harvested by the power harvesting module. Therefore, the semi-passive zero-power-consumption device is also a true zero-power-consumption device.

The semi-passive zero-power-consumption device inherits many advantages of the passive zero-power-consumption device, and thus the semi-passive zero-power-consumption device has many advantages such as small size, light weight, very cheap price and long service life.

### 3) Active zero-power-consumption device

The zero-power-consumption device used in some scenarios may also be an active zero-power-consumption device, which may have a built-in battery (a conventional battery, such as a dry battery, or a rechargeable lithium battery). The battery is used to drive a low-power chip circuit of the zero-power-consumption device. Thus, the signal demodulation of the forward link and the signal modulation of the backward link are realized. However, for the backscatter link, the zero-power-consumption device transmits signals in the backscatter manner. Therefore, the zero power consumption of this type of terminal is mainly reflected in the fact that the signal transmission of the backward link does not need the power of the terminal itself, but uses the backscatter manner. Although the active zero-power-consumption device uses the battery, the power consumption is very low due to the use of ultra-low power communication technology. Therefore, compared with the prior art, the working life of the battery may be significantly extended.

For the active zero-power-consumption device, the built-in battery supplies power to the RFID chip, thereby increasing a reading and write distance of a tag, and improving communication reliability. Therefore, the active zero-power-consumption device may be applied in some scenarios with relatively high requirements on a communication distance, a reading delay, etc.

In order to facilitate better understanding of the embodiments of the present disclosure, a device based on ambient power related to the present disclosure is described below.

In an NR system and a WiFi system, the battery-free and low-cost devices may support low-cost, large-scale deployment and maintenance-free of Internet of Things (IoT) devices. The current standard is studying how to support the IoT device based on the ambient power in the NR system and the WiFi system, and the IoT device based on the ambient power is referred to as an ambient IoT device or an AMP IoT device, and the power required for its operation comes from ambient power collection. The source of the ambient power may be a wireless signal, solar power, thermal power, etc. This type of device is similar to a passive device or a semi-passive device in the zero-power-consumption communication.

In order to facilitate better understanding of the embodiments of the present disclosure, a physical layer protocol data unit (PPDU) related to the present disclosure is described below.

The information of a WIFI device is transmitted based on a PPDU frame. The PPDU frame includes a physical layer header and a data part. For example, in 802.11a/g, there are three parts in the front of the physical layer header, which are a short training field (STF), a long training field (LTF), and a SIGNAL field, i.e., the short training field, the long training field and some specific settings of the data part, which are shown in FIG. 2. The first part is the STF, the STF is mainly composed of 10 short symbols (t1 to t10), and each of the symbols is 0.8 µs. The STF includes many functions, and mainly realizes frame synchronization and coarse frequency synchronization. Here, the functions implemented by t1 to t7 mainly include signal detect, automatic gain control (AGC), and diversity selection, and the functions implemented by t8 to t10 mainly include coarse frequency (coarse freq), offset estimation, and timing synchronization (timing synchronize). The second part is the LTF, which realizes fine frequency synchronization and channel estimation. The SIGNAL part carries information related to the data part, including data transmission rate, length information of the data packet, reserved bit(s) and tail bit(s). The data part of the PPDU carries a media access control (MAC) frame. A frame format of the MAC frame includes the following parts: a MAC header, a frame body and a frame check sequence (FCS), which are shown in FIG. 3.

In order to facilitate better understanding of the embodiments of the present disclosure, a wake up receiver (WUR) related to the present disclosure is described below.

In the 802.11ba technology, a WUR STA device has a WUR for receiving a wake up signal. The WUR has the characteristics of extremely low cost, extremely low complexity and extremely low power consumption, and mainly receives the wake up signal based on envelope detection. In a case where the WUR STA is in a sleep state, its main receiver may be turned off to save power, while the WUR is in an on-state to receive the wake up signal transmitted by the AP. If the AP needs to transmit data to the STA, the AP may wake up the STA through the wake up signal to turn on the main receiver. Otherwise, the main receiver of the UE may be in an off-state.

In the WiFi system, for a STA device, if not associated with an AP, the STA device needs to perform active scanning to discover surrounding APs and select a suitable AP to initiate the association process. If the STA has been associated with an AP, it is also necessary to perform a scanning process to discover a new AP because the STA may move out of the coverage area of the AP. Generally, the STA performs the scanning on a plurality of channels, and searches for beacon frames transmitted by APs or actively transmits probe request frames and then waits for probe response frames transmitted by the APs. The scanning process will increase the power consumption and delay of the STA. In order to reduce the power consumption and delay of scanning, for a WUR STA, scanning may be performed by the WUR, especially for the case where the WUR STA is in the sleep state and the main receiver is turned off. In the 802.11ba technology, a WUR AP may transmit a WUR discovery frame to indicate a compressed service set identifier (SSID) of the AP and a primary channel of a basic service set (BSS) corresponding to the AP. The WUR STA receives the WUR discovery frame via the WUR to obtain BSS information of nearby APs, thereby reducing the power consumption and delay of the main receiver of the WUR STA for scanning.

In the 802.11ba technology, although the WUR of the WUR STA has extremely low power consumption compared to the main receiver, the WUR STA is still an active device and the power supply is not limited. For an AMP STA, its power source is not stable and its power storage capacity is also greatly limited, so that there are more stringent requirements on power use. Especially in an initial working stage of the AMP STA, subsequent processes such as scanning BSS and association cannot be performed without power. Therefore, in a case where the AMP STA is out of power, the first thing to do is to obtain power. Although wireless signals in the space are relatively abundant, they are not stable. A reliable method is for the AP or a dedicated power supply node to provide power to the AMP STA within the coverage area.

In order to facilitate better understanding of the embodiments of the present disclosure, the problems solved by the present disclosure are described below.

The power required for the operation of the IoT device based on the ambient power mainly comes from the environment, e.g., is supplied by a wireless radio frequency signal. In a case where a device communicates with a network, the device needs to first harvest enough ambient power to support subsequent processes such as synchronization and access. At present, there is no stable ambient power, such as the wireless radio frequency signal, to provide the device with the power described in communication-related processes. Thus, it is difficult to achieve stable and reliable operation of the IoT device based on the ambient power. In addition, at present, it is not possible to discover an ambient power device well.

Based on the above problems, the present disclosure proposes a solution for discovering an ambient power station, in which the ambient power station receives a discovery signal on at least one channel that is preset, thereby avoiding blind detection of the discovery signal by the ambient power station on all channels, reducing the delay in detecting the discovery signal, reducing the power consumed by the ambient power station due to detecting the discovery signal, and ensuring communication accessibility of the ambient power station. Alternatively, the present disclosure proposes a solution for providing power to the ambient power station, in which the ambient power station receives a power supply signal on at least one channel that is preset, thereby avoiding blind detection of the power supply signal by the ambient power station on all channels, providing power to the ambient power station more stably and efficiently, and ensuring the communication accessibility of the ambient power station.

To facilitate understanding of the technical solutions of the embodiments of the present disclosure, the technical solutions of the present disclosure are described in detail below through specific embodiments. The following related technologies can be arbitrarily combined with the technical solutions of the embodiments of the present disclosure as optional solutions, and they all belong to the protection scope of the embodiments of the present disclosure. The embodiments of the present disclosure include at least part of the following contents.

FIG. 4 is a schematic flow chart of a wireless communication method 200 according to embodiments of the present disclosure. As shown in FIG. 4, the wireless communication method 200 may include at least part of the following contents:
S210: an ambient power access point transmits a discovery signal on at least one channel that is preset;
S220: an ambient power station receives the discovery signal on the at least one channel that is preset.

In the embodiments of the present disclosure, the ambient power station receives the discovery signal on the at least one channel that is preset, so that the ambient power access point may discover the ambient power station, which avoids the ambient power station from blindly detecting the discovery signal on all channels, reduces delay of detecting the discovery signal, reduces power consumed by the ambient power station due to detecting the discovery signal, and thereby ensures communication accessibility of the ambient power station.

In the embodiments of the present disclosure, the ambient power station obtains the power required for the communication by harvesting ambient power (e.g., light power, thermal power, wind power, radio frequency power, mechanical power, or kinetic power), and can support a backscatter communication manner and an active transmission communication manner.

In the embodiments of the present disclosure, the ambient power station may also be referred to as an "ambient power enabled IoT device" or an "ambient IoT device". Specifically, the ambient IoT device refers to an IoT device that uses a lot of ambient power, such as wireless radio frequency power, light power, solar power, thermal power, mechanical power, and other ambient power. The ambient IoT device may have no power storage capability or may have very limited power storage capability (e.g., have a capacitor with a capacity of tens of microfarads (µF)).

In the embodiments of the present disclosure, the ambient power access point (AMP AP) may be a device that communicates with the ambient power station (AMP STA). The AMP AP can be a conventional access point (AP), or can obtain the power required for the communication by harvesting the ambient power (e.g., light power, thermal power, wind power, radio frequency power, mechanical power, or kinetic power), just like the ambient power station.

In some embodiments, the ambient power station may also be a zero-power-consumption device with features such as battery-free and maintenance-free. Specifically, the zero-power-consumption device has a simple structure, low complexity, and low cost; and the zero-power-consumption device can support power harvesting of the ambient power (e.g., light power, thermal power, radio frequency power, mechanical power, or kinetic power) to obtain the power required for the communication, and support a backscatter communication manner. For some zero-power-consumption devices, they may also support an active transmission communication manner.

In some embodiments, in the above S220, the ambient power station receives the discovery signal on the at least one channel before associating with the ambient power access point. That is, before the ambient power station associates with the ambient power access point, the ambient power station receives the discovery signal on the at least one channel that is preset, which avoids the blind detection of the discovery signal by the ambient power station on all channels, reduces the delay of detecting the discovery signal, reduces the power consumed by the ambient power station due to detecting the discovery signal, and thereby ensures the communication accessibility of the ambient power station.

In some embodiments, the discovery signal received on the at least one channel carries at least one of:
a SSID of the ambient power access point and primary channel information of a BSS corresponding to the ambient power access point.

For example, the SSID of the ambient power access point that is carried by the discovery signal received on the at least one channel may be a compressed SSID.

That is, in this embodiment, the ambient power access point may carry the compressed SSID of the ambient power access point and the primary channel information of the BSS corresponding to the ambient power access point in the discovery signal. The ambient power access point scans for the discovery signal on the at least one channel that is preset. While obtaining the discovery signal, the ambient power access point also obtains the compressed SSID of the ambient power access point and the primary channel information of the BSS corresponding to the ambient power access point, thereby avoiding the ambient power station from directly scanning all channels, reducing the delay of detecting the discovery signal, and reducing the power consumed by the ambient power station due to detecting the discovery signal.

In some embodiments, the discovery signal received on the at least one channel carries transmission parameter(s) of a beacon frame of the ambient power access point.

In some embodiments, the discovery signal received on the at least one channel carries at least one of:
the SSID of the ambient power access point, the primary channel information of the BSS corresponding to the ambient power access point, and the transmission parameter(s) of the beacon frame of the ambient power access point.

In some embodiments, the transmission parameter(s) of the beacon frame of the ambient power access point include but are not limited to at least one of: a beacon interval, a target beacon transmission time (TBTT), and offset information in time domain between the discovery signal carrying the transmission parameter(s) of the beacon frame of the ambient power access point and the TBTT (e.g., the latest TBTT).

That is, in this embodiment, the ambient power access point can carry the transmission parameter(s) of the beacon frame of the ambient power access point on the discovery signal, so that the ambient power station can detect the beacon frame of the ambient power access point based on the transmission parameter(s) of the beacon frame of the ambient power access point, thereby reducing the delay of detecting the beacon frame and reducing the power consumed by the ambient power station due to detecting the beacon frame.

In some embodiments, the ambient power station obtains power through the discovery signal received on the at least one channel. That is, in this embodiment, the discovery signal may also provide the power for the ambient power station, which may solve the power supply problem of the ambient power station, and avoid the ambient power station from blindly detecting the power supply signal on all channels. Thus, the power may be provided to the ambient power station more stably and efficiently.

For example, in order for the work of the ambient power station, the ambient power access point needs to provide a basic power supply signal. For example, the ambient power access point transmits a discovery signal on the at least one channel that is preset, so that the ambient power station preferentially obtains the power through the discovery signal on the at least one channel in a case where the ambient power station is out of power. Thus, the ambient power station may perform subsequent work. In this way, it may be possible to prevent the ambient power station from scanning for the power supply signal in a case where there is no power storage in the ambient power station or the power storage of the the ambient power station is very low.

In some embodiments, the at least one channel belongs to one or more frequency bands. For example, the at least one channel that is preset includes a specific channel in a specific frequency band, for example, Channel 1 in the 2.4 GHz frequency band, or Channel 40, Channel 44, Channel 149 or Channel 153 in the 5 GHz frequency band, and further includes a channel in a frequency band below 1 GHz. For the ambient power station, before associating with the ambient power access point, it may first obtain power through the at least one channel that is preset.

In some embodiments, the frequency band(s) to which the at least one channel belongs are agreed upon by a protocol, and/or frequency domain resource(s) used by the ambient power station to receive the discovery signal on the at least one channel are agreed upon by a protocol.

For example, the frequency domain resource used by the ambient power station to receive the discovery signal on the at least one channel may be a partial bandwidth of a 20 MHz channel in the 2.4 GHz frequency band. The center frequencies of 14 channels that are partially overlapped with each other in the 2.4 GHz frequency band can be as shown in Table 1, and the interval between the center frequencies of different channels is 5 MHz. The effective bandwidth of each channel is 20 MHz, with an additional 2 MHz as an isolation bandwidth. For example, for an ambient power station, in a case where there is out of power, it is necessary to obtain a discovery signal on Channel 1 in the 2.4 GHz frequency band to perform corresponding power storage and then carry out subsequent work.

**Table 1**

| **Channel Identifier (CHNL_ID)** | **Frequency (MHz)** |
|---|---|
| 1 | 2412 |
| 2 | 2417 |
| 3 | 2422 |
| 4 | 2427 |
| 5 | 2432 |
| 6 | 2437 |
| 7 | 2442 |
| 8 | 2447 |
| 9 | 2452 |
| 10 | 2457 |
| 11 | 2462 |
| 12 | 2467 |
| 13 | 2472 |
| 14 | 2484 |

In some embodiments, the discovery signal received by the ambient power station on the at least one channel carries first indication information.

Here, the first indication information is used to indicate information (e.g., a channel number or a channel index) of a channel in which the power supply signal of the ambient power station is located, or the first indication information is used to indicate information (e.g., a channel set number or a channel set index) of a channel set in which the power supply signal of the ambient power station is located, or the first indication information is used to indicate information (e.g., a frequency band number or a frequency band index) of a frequency band in which the power supply signal of the ambient power station is located.

For example, after obtaining the power storage through the discovery signal received on the at least one channel that is preset, the ambient power station may directly obtain channels or frequency bands in which other power supply signals are located. For example, the first indication information may be directly carried in the discovery signal, and may indicate channel numbers or frequency band numbers of the other power supplies. Specifically, after obtaining the first indication information, the ambient power station may retune to a corresponding channel or frequency band to obtain power supply. Specifically, the first indication information may also indicate a channel set (i.e., a first channel set) that includes a plurality of channels. After obtaining the power storage through the discovery signal received on the at least one channel that is preset, the ambient power station may perform scanning on the channels or frequency bands indicated by the first indication information to obtain other power supply signals. For example, the discovery signal received on the preset channel of Channel 1 in the 2.4 GHz frequency band carries first indication information, and the first indication information may indicate that a channel set (i.e., a first channel set) in which other power supply signals are located includes Channel 6, Channel 7, and Channel 8.

In some embodiments, in the case where the first indication information is used to indicate the information of the channel in which the power supply signal of the ambient power station is located, the channel in which the power supply signal of the ambient power station is located is the same as a channel used by the ambient power station for the communication.

In some embodiments, in the case where the first indication information is used to indicate the information of the channel set in which the power supply signal of the ambient power station is located, the channel set in which the power supply signal of the ambient power station is located includes a channel used by the ambient power station for the communication.

In some embodiments, in the case where the first indication information is used to indicate the information of the frequency band in which the power supply signal of the ambient power station is located, the frequency band in which the power supply signal of the ambient power station is located is the same as a frequency band used by the ambient power station for the communication.

Specifically, in order to avoid the AMP STA from constantly retuning between a power harvesting channel and a communication channel, optimally, the power supply signal and a communication-related channel are on the same channel or in the same frequency band.

In some embodiments, the power supply signal received by the ambient power station based on the first indication information carries second indication information, where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the discovery signal received by the ambient power station on the at least one channel carries second indication information, where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

Optionally, the primary channel of the target BSS is a channel on which a beacon frame of the target BSS is transmitted.

In some embodiments, the second indication information is further used to indicate identification information of the target BSS.

In some embodiments, the primary channel of the target BSS is used by the ambient power station to receive the beacon frame; and/or the primary channel of the target BSS is used by the ambient power station to transmit a probe request frame; and/or the primary channel of the target BSS is used by the ambient power station to receive a probe response frame.

Optionally, the beacon frame may be an AMP beacon frame, which may be a dedicated beacon frame for the AMP STA.

Optionally, the probe request frame may be an AMP probe request frame, which may be a dedicated probe request frame for the AMP STA. Optionally, the probe response frame may be an AMP response request frame, which may be a dedicated response request frame for the AMP STA.

Specifically, the AMP STA may obtain the channel number of the primary channel of the target BSS or the number of the channel in the channel set of the target BSS while obtaining power, thereby reducing the power consumption and delay for the case where the AMP STA subsequently performs scanning on a plurality of channels to determine the primary channel of the target BSS. The AMP STA may receive the AMP beacon frame, or transmit the probe request frame and receive the probe response frame on the channel indicated by the second indication information. For example, the power supply signal received on Channel 1 in the 2.4 GHz frequency band carries the second indication information, which indicates that the primary channel of the target BSS is Channel 6. The information carried in the power supply signal may indicate not only the primary channel of the target BSS, but also the ID information of the target BSS.

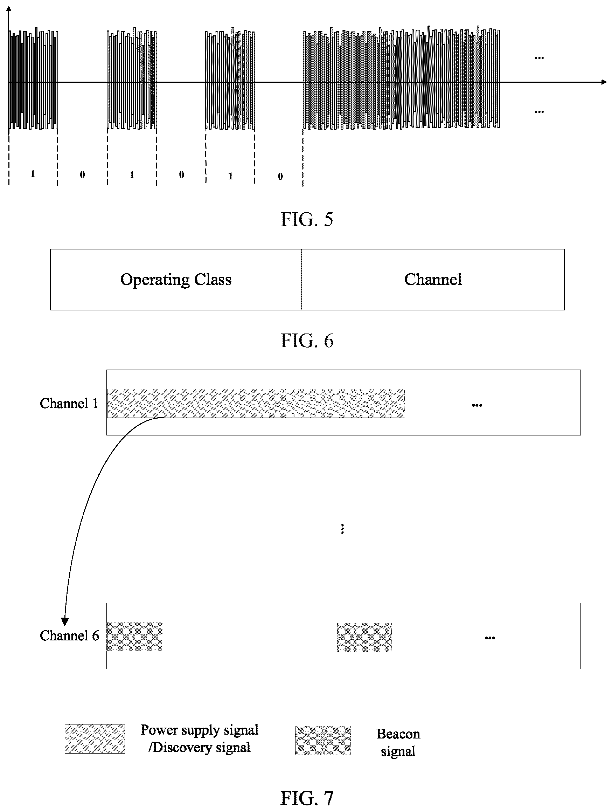

In some embodiments, a waveform of the power supply signal is generally a continuous wave (CW). The power supply signal may carry information (e.g., the second indication information) by means of amplitude modulation (e.g., on-off keying (OOK) modulation). As shown in FIG. 5, the OOK modulation is performed in the power supply signal, and the information 101010 is carried as the second indication information. The power supply signal may be used as a periodic signal to repeatedly transmit power supply information. The power supply signal may be transmitted in a certain frame structure, and the frame structure includes a part that carries information and a part that does not carry information. The power supply efficiency of the part that does not carry information is higher than that of the part that carries information.

In some embodiments, the beacon frame or the probe response frame received by the ambient power station on the primary channel of the target BSS carries first power supply information. The first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element. The radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS. For example, the radio frequency power source information element can be as shown in FIG. 6.

For example, after receiving the AMP beacon frame on the primary channel through the harvested power and scanning, the AMP STA may obtain parameters of the target BSS and then perform the subsequent association process. The AMP beacon frame may carry information related to the power supply signal, such as a frequency band and a channel, so that the AMP STA may obtain power on the corresponding channel and communicate on the same or different channels. The power supply signal here is a power supply signal specific to the target BSS, and is a power supply signal required for the AMP STA to work in the target BSS. The frequency band and the channel mentioned above may be indicated through the operating class and channel information. The operating class is an index number, corresponding to a frequency range including a set of channels, a channel bandwidth, a channel center frequency and specification requirements that need to be met.

In some embodiments, after the ambient power station associates with the ambient power access point, the ambient power station receives a discovery signal transmitted by the ambient power access point. The discovery signal received by the ambient power station after associating with the ambient power access point carries at least one of: a SSID of a neighboring access point, primary channel information of a BSS corresponding to the neighboring access point, and transmission parameter(s) of a beacon frame of the neighboring access point.

Optionally, the SSID of the neighboring access point may be a compressed SSID.

In some embodiments, the transmission parameter(s) of the beacon frame of the neighboring access point include at least one of: a beacon interval, a TBTT, and offset information in time domain between the discovery signal carrying the transmission parameter(s) of the beacon frame of the neighboring access point and the TBTT (e.g., the latest TBTT).

In some embodiments, the discovery signal received by the ambient power station after associating with the ambient power access point is a power supply signal of the ambient power station after associating with the ambient power access point.

In some embodiments, a channel and/or frequency band used by the ambient power station to receive the discovery signal after associating with the ambient power access point is indicated by the ambient power access point through at least one of the following frames: a beacon frame, a probe response frame, a management frame, or a control frame.

Specifically, for an AMP STA, in a case where it is not associated with an ambient power access point, it obtains power through a power supply signal on a preset channel and performs a scanning process. In a case where the AMP STA is associated with the ambient power access point, the scanning process is also required to discover a new AP because the AMP STA may move out of the coverage of the ambient power access point. At present, the STA preforms scanning on a plurality of channels, and searches for beacon frames transmitted by APs or actively transmits probe request frames and then waits for probe response frames transmitted by APs. The power consumption of the scanning process is unacceptable for the AMP STA. Similar to the purpose of introducing WUR discovery frame in 802.11ba, it is also necessary to consider the scanning manner for reducing power consumption during the scanning process of the AMP STA. Due to the need for supply power of the AMP STA, the process of the AMP STA scanning the power supply signal may also be used as a process of scanning nearby BSSs.

Specifically, the ambient power access point (AMP AP) indicates a frequency band and a channel in which a power supply signal is located to the ambient power station (AMP STA) through an AMP beacon frame or a probe response frame, or through a management frame or control frame of another type. The AMP AP may carry compressed SSIDs of nearby APs and primary channel information of BSSs corresponding to the APs in the power supply signal. On these channels, the AMP STA scans for power supply signals to obtain power, and meanwhile, the AMP STA obtains, from these power supply signals, the compressed SSIDs of the nearby APs and the primary channel information of the BSSs corresponding to the APs, thereby reducing the power consumption and delay of the AMP STA directly scanning the plurality of channels according to the existing STA scanning manner. Furthermore, in addition to carrying the compressed SSID of the nearby AP and the primary channel information of the BSS corresponding to the AP, the power supply signal may also carry the transmission parameters of the beacon frame, such as the beacon interval, target beacon transmission times (TBTTs), and the time offset information between the TBTT (the latest TBTT) and the power supply signal carrying the above information. The AMP STA may detect the beacon based on this information, which may reduce the power consumption required to detect the beacon frame.

In the embodiment of the present disclosure, the discovery signal no longer has a single function of serving as a discovery signal to assist the AMP STA in scanning nearby BSSs, but it may also provide power to reduce power consumption. As shown in FIG. 7, the AMP STA obtains a SSID and a primary channel of a nearby BSS through the power supply signal on Channel 1, and directly detects the beacon frame on Channel 6.

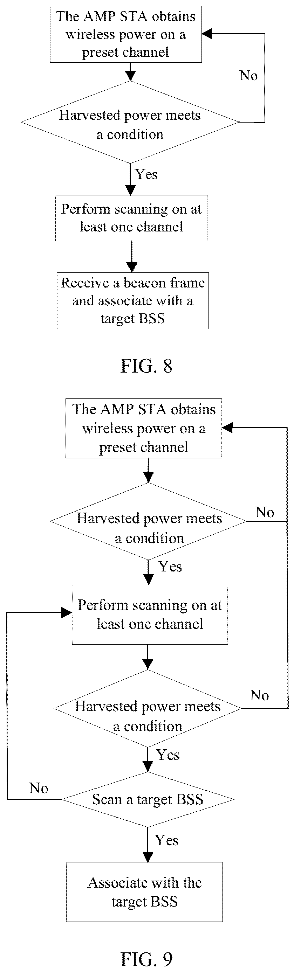

In some embodiments, a process of the AMP STA performing BSS scanning may be as shown in FIG. 8. Specifically, the AMP STA may obtain wireless power on a preset channel. In a case where the harvested power of the AMP STA meets a condition (e.g., a communication condition of the AMP STA), the AMP STA performs scanning on at least one channel to receive a beacon frame and associate with a target BSS.

In some embodiments, a process of the AMP STA performing BSS scanning may be as shown in FIG. 9. During a process of performing scanning to associate with a target BSS, the AMP STA may be unable to continue the scanning due to power consumption. In a case where the power harvested by the AMP STA is not enough for work, the AMP STA may continue to obtain power through a wireless power supply signal on the preset channel. As shown in FIG. 9, during the scanning process of the AMP STA, it is determined whether the harvested power meets a condition (e.g., a communication condition of the AMP STA); if so, the scanning continues. Otherwise, the power needs to be obtained through the wireless power supply signal on the preset channel.

Therefore, in the embodiments of the present disclosure, the ambient power station receives a discovery signal on at least one channel that is preset, so that the ambient power access point may discover the ambient power station, which avoids the ambient power station from blindly detecting the discovery signal on all channels, reduces the delay of detecting the discovery signal, reduces the power consumed by the ambient power station due to detecting the discovery signal, and thereby ensures the communication accessibility of the ambient power station.

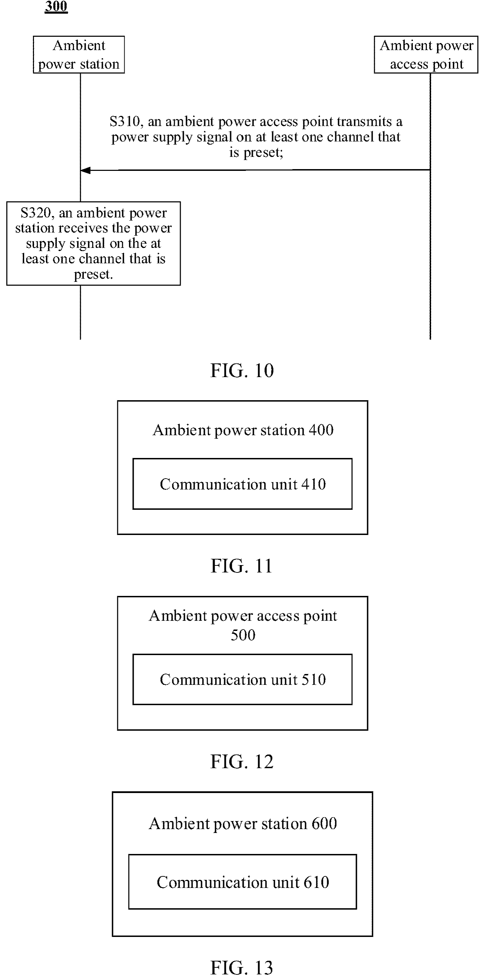

FIG. 10 is a schematic flow chart of a wireless communication method 300 according to embodiments of the present disclosure. As shown in FIG. 10, the wireless communication method 300 may include at least part of the following contents:
S310: an ambient power access point transmits a power supply signal on at least one channel that is preset;
S320: an ambient power station receives the power supply signal on the at least one channel that is preset.

In the embodiments of the present disclosure, the ambient power station receives the power supply signal on the at least one channel that is preset, which avoids the ambient power station from blindly detecting the power supply signal on all channels. Thus, power is provided to the ambient power station more stably and efficiently, thereby ensuring the communication accessibility of the ambient power station.

In the embodiments of the present disclosure, the ambient power station obtains the power required for the communication by harvesting ambient power (e.g., light power, thermal power, wind power, radio frequency power, mechanical power, or kinetic power), and can support a backscatter communication manner and an active transmission communication manner.

In the embodiments of the present disclosure, the ambient power station may also be referred to as an "ambient power enabled IoT device" or an "ambient IoT device". Specifically, the ambient IoT device refers to an IoT device that uses a lot of ambient power, such as wireless radio frequency power, light power, solar power, thermal power, mechanical power, and other ambient power. The ambient IoT device may have no power storage capability or may have very limited power storage capability (e.g., have a capacitor with a capacity of tens of microfarads (µF).

In the embodiments of the present disclosure, the ambient power access point (AMP AP) may be a device that communicates with the ambient power station (AMP STA). The AMP AP can be a conventional access point (AP), or can obtain the power required for the communication by harvesting ambient power (e.g., light power, thermal power, wind power, radio frequency power, mechanical power, or kinetic power) , just like the ambient power station.

In some embodiments, the ambient power station may also be a zero-power-consumption device with features such as battery-free and maintenance-free. Specifically, the zero-power-consumption device has a simple structure, low complexity, and low cost; and the zero-power-consumption device can support power harvesting of the ambient power (e.g., light power, thermal power, radio frequency power, mechanical power, or kinetic power) to obtain the power required for the communication, and support a backscatter communication manner. For some zero-power-consumption devices, they may also support an active transmission communication manner.

In some embodiments, in the above S320, the ambient power station receives the power supply signal on the at least one channel before associating with the ambient power access point. That is, before the ambient power station associates with the ambient power access point, the ambient power station receives the power supply signal on the at least one channel that is preset, which avoids the ambient power station from blindly detecting the power supply signal on all channels. Thus, power is provided to the ambient power station more stably and efficiently, thereby ensuring the communication accessibility of the ambient power station.

In some embodiments, the power supply signal received on the at least one channel carries at least one of:
a SSID of the ambient power access point and primary channel information of a BSS corresponding to the ambient power access point.

For example, the SSID of the ambient power access point that is carried by the power supply signal received on the at least one channel may be a compressed SSID.

That is, in this embodiment, the ambient power access point may carry the compressed SSID of the ambient power access point and the primary channel information of the BSS corresponding to the ambient power access point in the power supply signal. The ambient power access point scans for the power supply signal on the at least one channel that is preset. While obtaining the power supply signal, the ambient power access point also obtains the compressed SSID of the ambient power access point and the primary channel information of the BSS corresponding to the ambient power access point, thereby avoiding the ambient power station from directly scanning all channels, reducing the delay of detecting the power supply signal, and reducing the power consumed by the ambient power station due to detecting the power supply signal.

In some embodiments, the power supply signal received on the at least one channel carries transmission parameter(s) of a beacon frame of the ambient power access point.

In some embodiments, the transmission parameter(s) of the beacon frame of the ambient power access point include but are not limited to at least one of the following: a beacon interval, a target beacon transmission time (TBTT), and offset information in time domain between the power supply signal carrying the transmission parameter(s) of the beacon frame of the ambient power access point and the TBTT (e.g., the latest TBTT).

That is, in this embodiment, the ambient power access point can carry the transmission parameter(s) of the beacon frame of the ambient power access point on the power supply signal, so that the ambient power station can detect the beacon frame of the ambient power access point based on the transmission parameter(s) of the beacon frame of the ambient power access point, thereby reducing the delay of detecting the beacon frame and reducing the power consumed by the ambient power station due to detecting the beacon frame.

In some embodiments, the power supply signal received by the ambient power station on the at least one channel is also used to discover the ambient power station. Therefore, the ambient power access point may discover the ambient power station, thereby avoiding the blind detection of the discovery signal by the ambient power station on all channels, reducing the delay of detecting the discovery signal, reducing the power consumed by the ambient power station due to detecting the discovery signal, and ensuring the communication accessibility of the ambient power station.

Specifically, in the embodiments of the present disclosure, in order for the work of the AMP STA, the network needs to provide a basic power supply signal. For example, an power supply signal is sent on a preset channel in a certain frequency band, so that the AMP STA first obtains the power through the power supply signal on the preset channel to perform subsequent work in a case where the AMP STA is out of power. In this way, it may be possible to prevent the AMP STA from scanning for the power supply signal in a case where there is no power storage in the AMP STA or the power storage of the AMP STA is very low.

In some embodiments, the at least one channel belongs to one or more frequency bands. For example, the at least one channel that is preset includes a specific channel in a specific frequency band, for example, Channel 1 in the 2.4 GHz frequency band, or Channel 40, Channel 44, Channel 149 or Channel 153 in the 5 GHz frequency band, and further includes a channel in a frequency band below 1 GHz. For the ambient power station, before associating with the ambient power access point, it may first obtain power through the at least one channel that is preset.

In some embodiments, the frequency band(s) to which the at least one channel belongs are agreed upon by a protocol, and/or frequency domain resource(s) used by the ambient power station to receive the power supply signal on the at least one channel are agreed upon by a protocol.

For example, the frequency domain resource used by the ambient power station to receive the power supply signal on the at least one channel may be a partial bandwidth of a 20 MHz channel in the 2.4 GHz frequency band. The center frequencies of 14 channels that are partially overlapped with each other in the 2.4 GHz frequency band can be as shown in Table 1 above, and the interval between the center frequencies of different channels is 5 MHz. The effective bandwidth of each channel is 20 MHz, with an additional 2 MHz as an isolation bandwidth. For example, for an ambient power station, in a case where there is out of power, it is necessary to obtain a discovery signal on Channel 1 in the 2.4 GHz frequency band to perform corresponding power storage and then carry out subsequent work.

In some embodiments, the power supply signal received by the ambient power station on the at least one channel carries first indication information.

Here, the first indication information is used to indicate information (e.g., a channel number or a channel index) of a channel in which the power supply signal of the ambient power station is located, or the first indication information is used to indicate information (e.g., a channel set number or a channel set index) of a channel set in which the power supply signal of the ambient power station is located, or the first indication information is used to indicate information (e.g., a frequency band number or a frequency band index) of a frequency band in which the power supply signal of the ambient power station is located.

For example, after obtaining the power storage through the power supply signal received on the at least one channel that is preset, the ambient power station may directly obtain channels or frequency bands in which other power supply signals are located. For example, the first indication information may be directly carried in the power supply signal, and may indicate channel numbers or frequency band numbers of the other power supplies. Specifically, after obtaining the first indication information, the ambient power station may retune to a corresponding channel or frequency band to obtain power supply. Specifically, the first indication information may also indicate a channel set (i.e., a first channel set) that includes a plurality of channels. After obtaining the power storage through the power supply signal received on the at least one channel that is preset, the ambient power station may perform scanning on the channels or frequency bands indicated by the first indication information to obtain other power supply signals. For example, the power supply signal received on the preset channel of Channel 1 in the 2.4 GHz frequency band carries first indication information, and the first indication information may indicate that a channel set (i.e., a first channel set) in which other power supply signals are located includes Channel 6, Channel 7, and Channel 8.

In some embodiments, in the case where the first indication information is used to indicate the information of the channel in which the power supply signal of the ambient power station is located, the channel in which the power supply signal of the ambient power station is located is the same as a channel used by the ambient power station for the communication.

In some embodiments, in the case where the first indication information is used to indicate the information of the channel set in which the power supply signal of the ambient power station is located, the channel set in which the power supply signal of the ambient power station is located includes a channel used by the ambient power station for the communication.

In some embodiments, in the case where the first indication information is used to indicate the information of the frequency band in which the power supply signal of the ambient power station is located, the frequency band in which the power supply signal of the ambient power station is located is the same as the frequency band used by the ambient power station for the communication.

Specifically, in order to avoid the AMP STA from constantly retuning between a power harvesting channel and a communication channel, optimally, the power supply signal and a communication-related channel are on the same channel or in the same frequency band.

In some embodiments, the power supply signal received by the ambient power station based on the first indication information carries second indication information, where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the power supply signal received by the ambient power station on the at least one channel carries second indication information, where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

Optionally, the primary channel of the target BSS is a channel on which a beacon frame of the target BSS is transmitted.

In some embodiments, the second indication information is further used to indicate identification information of the target BSS.

In some embodiments, the primary channel of the target BSS is used by the ambient power station to receive the beacon frame; and/or the primary channel of the target BSS is used by the ambient power station to transmit a probe request frame; and/or the primary channel of the target BSS is used by the ambient power station to receive a probe response frame.

Optionally, the beacon frame may be an AMP beacon frame, and may be a dedicated beacon frame for the AMP STA.

Optionally, the probe request frame may be an AMP probe request frame, and may be a dedicated probe request frame for the AMP STA. Optionally, the probe response frame may be an AMP response request frame, and may be a dedicated response request frame for the AMP STA.

Specifically, the AMP STA may obtain the channel number of the primary channel of the target BSS or the number of the channel in the channel set of the target BSS while obtaining power, thereby reducing the power consumption and delay for the case where the AMP STA subsequently performs scanning on a plurality of channels to determine the primary channel of the target BSS. The AMP STA may receive the AMP beacon frame, or transmit the probe request frame and receive the probe response frame on the channel indicated by the second indication information. For example, the power supply signal received on Channel 1 in the 2.4 GHz frequency band carries the second indication information, which indicates that the primary channel of the target BSS is Channel 6. The information carried in the power supply signal may indicate not only the primary channel of the target BSS, but also the ID information of the target BSS.

In some embodiments, a waveform of the power supply signal is generally a continuous wave (CW). The power supply signal may carry information (e.g., the second indication information) by means of amplitude modulation (e.g., OOK modulation). As shown in FIG. 5, the OOK modulation is performed in the power supply signal, and the information 101010 is carried as the second indication information. The power supply signal may be used as a periodic signal to repeatedly transmit power supply information. The power supply signal may be transmitted in a certain frame structure, and the frame structure includes a part that carries information and a part that does not carry information. The power supply efficiency of the part that does not carry information is higher than that of the part that carries information.

In some embodiments, the beacon frame or the probe response frame received by the ambient power station on the primary channel of the target BSS carries first power supply information. The first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element. The radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS. For example, the radio frequency power source information element can be as shown in FIG. 6.

For example, after receiving the AMP beacon frame on the primary channel through the harvested power and scanning, the AMP STA may obtain parameters of the target BSS and then perform the subsequent association process. The AMP beacon frame may carry information related to the power supply signal, such as a frequency band and a channel, so that the AMP STA may obtain power on the corresponding channel and communicate on the same or different channels. The power supply signal here is a power supply signal specific to the target BSS, and is a power supply signal required for the AMP STA to work in the target BSS. The frequency band and the channel mentioned above may be indicated through operating class and channel information. The operating class is an index number, corresponding to a frequency range including a set of channels, a channel bandwidth, a channel center frequency and specification requirements that need to be met.

In some embodiments, after the ambient power station associates with the ambient power access point, the ambient power station receives an power supply signal transmitted by the ambient power access point. The power supply signal received by the ambient power station after associating with the ambient power access point carries at least one of: a SSID of a neighboring access point, primary channel information of a BSS corresponding to the neighboring access point, and transmission parameter(s) of a beacon frame of the neighboring access point.

Optionally, the SSID of the neighboring access point may be a compressed SSID.

In some embodiments, the transmission parameter(s) of the beacon frame of the neighboring access point include at least one of: a beacon interval, a TBTT, and offset information in time domain between the power supply signal carrying the transmission parameter(s) of the beacon frame of the neighboring access point and the TBTT (e.g., the latest TBTT).

In some embodiments, the power supply signal received by the ambient power station after associating with the ambient power access point is a discovery signal of the ambient power station after associating with the ambient power access point.

In some embodiments, the channel and/or the frequency band used by the ambient power station to receive the power supply signal after associating with the ambient power access point is indicated by the ambient power access point through at least one of the following frames: a beacon frame, a probe response frame, a management frame, or a control frame.

Specifically, for an AMP STA, in a case where it is not associated with an ambient power access point, the AMP STA obtains power through a power supply signal on a preset channel and performs a scanning process. In a case where the AMP STA is associated with the ambient power access point, the scanning process is also required to discover a new AP because the AMP STA may move out of the coverage of the ambient power access point. At present, the STA preforms scanning on a plurality of channels, and searches for beacon frames transmitted by APs or actively transmits probe request frames and then waits for probe response frames transmitted by APs. The power consumption of the scanning process is unacceptable for the AMP STA. Similar to the purpose of introducing WUR discovery frame in 802.1 1ba, it is also necessary to consider a scanning manner for reducing power consumption during the scanning process of the AMP STA. Due to the need for supply power of the AMP STA, the process of the AMP STA scanning the power supply signal may also be used as a process of scanning nearby BSSs.

Specifically, the ambient power access point (AMP AP) indicates the frequency band and the channel in which a power supply signal is located to the ambient power station (AMP STA) through an AMP beacon frame or a probe response frame, or through a management frame or control frame of another type. The AMP AP may carry compressed SSIDs of nearby APs and primary channel information of BSSs corresponding to the APs in the power supply signal. On these channels, the AMP STA scans for power supply signals to obtain power, and meanwhile, the AMP STA obtains, from these power supply signals, the compressed SSIDs of the nearby APs and the primary channel information of the BSSs corresponding to the APs, thereby reducing the power consumption and delay of the AMP STA directly scanning the plurality of channels according to the existing STA scanning manner. Furthermore, in addition to carrying the compressed SSID of the nearby AP and the primary channel information of the BSS corresponding to the AP, the power supply signal may also carry the transmission parameters of the beacon frame, such as the beacon interval, target beacon transmission times (TBTTs), and the time offset information between the TBTT (the latest TBTT) and the power supply signal carrying the above information. The AMP STA may detect the beacon based on this information, which may reduce the power consumption required to detect the beacon frame.

In the embodiments of the present disclosure, the power supply signal no longer has a single power supply function, but it may also be used as a discovery signal to assist the AMP STA in scanning nearby BSSs, thereby reducing power consumption. As shown in FIG. 7, the AMP STA obtains a SSID and a primary channel of a nearby BSS through the power supply signal on Channel 1, and directly detects the beacon frame on Channel 6.

In some embodiments, a process of the AMP STA performing BSS scanning may be as shown in FIG. 8. Specifically, the AMP STA may obtain wireless power on a preset channel. In a case where the harvested power of the AMP STA meets a condition (e.g., a communication condition of the AMP STA), the AMP STA performs scanning on at least one channel to receive a beacon frame and associate with a target BSS.

In some embodiments, a process of the AMP STA performing BSS scanning may be as shown in FIG. 9. During a process of performing scanning to associate with a target BSS, the AMP STA may be unable to continue the scanning due to power consumption. In a case where the power harvested by the AMP STA is not enough for work, the AMP STA may continue to obtain power through a wireless power supply signal on the preset channel. As shown in FIG. 9, during the scanning process of the AMP STA, it is determined whether the harvested power meets a condition (e.g., a communication condition of the AMP STA); if so, the scanning continues. Otherwise, power is required through the wireless power supply signal on the preset channel.

Therefore, in the embodiments of the present disclosure, the ambient power station receives the power supply signal on at least one channel that is preset, which avoids the ambient power station from blindly detecting the power supply signal on all channels. Thus, power is provided to the ambient power station more stably and efficiently, thereby ensuring the communication accessibility of the ambient power station.

The above, in combination with FIGS. 4 to 10, describes in detail the method embodiments of the present disclosure. The following, in combination with FIGS. 11 to 17, describes in detail the apparatus embodiments of the present disclosure. It should be understood that the apparatus embodiments and the method embodiments correspond to each other, and similar descriptions may refer to the method embodiments.

FIG. 11 shows a schematic block diagram of an ambient power station 400 according to embodiments of the present disclosure. As shown in FIG. 11, the ambient power station 400 includes:
a communication unit 410 configured to receive a discovery signal on at least one channel that is preset.

In some embodiments, the discovery signal received on the at least one channel carries at least one of:
a service set identifier (SSID) of an ambient power access point and primary channel information of a basic service set (BSS) corresponding to the ambient power access point.

In some embodiments, the discovery signal received on the at least one channel carries a transmission parameter of a beacon frame of the ambient power access point.

In some embodiments, the transmission parameter of the beacon frame of the ambient power access point includes at least one of: a beacon interval, a target beacon transmission time (TBTT), and offset information in time domain between the discovery signal carrying the transmission parameter of the beacon frame of the ambient power access point and the TBTT.

In some embodiments, the ambient power station obtains power through the discovery signal received on the at least one channel.

In some embodiments, the at least one channel belongs to one or more frequency bands.

In some embodiments, a frequency band to which the at least one channel belongs is agreed upon by a protocol, and/or a frequency domain resource used by the ambient power station to receive the discovery signal on the at least one channel is agreed upon by a protocol.

In some embodiments, the communication unit 410 is specifically configured to:
receive the discovery signal on the at least one channel before associating with the ambient power access point.

In some embodiments, the discovery signal received by the ambient power station on the at least one channel carries first indication information;
where the first indication information is used to indicate information of a channel in which a power supply signal of the ambient power station is located, or the first indication information is used to indicate information of a channel set in which the power supply signal of the ambient power station is located, or the first indication information is used to indicate information of a frequency band in which the power supply signal of the ambient power station is located.

In some embodiments, in the case where the first indication information is used to indicate the information of the channel in which the power supply signal of the ambient power station is located, the channel in which the power supply signal of the ambient power station is located is the same as a channel used by the ambient power station for a communication; or
in the case where the first indication information is used to indicate the information of the channel set in which the power supply signal of the ambient power station is located, the channel set in which the power supply signal of the ambient power station is located includes a channel used by the ambient power station for a communication; or
in the case where the first indication information is used to indicate the information of the frequency band in which the power supply signal of the ambient power station is located, the frequency band in which the power supply signal of the ambient power station is located is the same as a frequency band used by the ambient power station for a communication.

In some embodiments, the power supply signal received by the ambient power station based on the first indication information carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the discovery signal received by the ambient power station on the at least one channel carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the second indication information is further used to indicate identification information of the target BSS.

In some embodiments, the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

In some embodiments, the beacon frame or the probe response frame received by the ambient power station on the primary channel of the target BSS carries first power supply information; where the first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element, where the radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

In some embodiments, after the ambient power station associates with an ambient power access point, the communication unit 410 is further configured to receive a discovery signal transmitted by the ambient power access point;
where the discovery signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

In some embodiments, the transmission parameter of the beacon frame of the neighboring access point includes at least one of: a beacon interval, a TBTT, and offset information in time domain between the discovery signal carrying the transmission parameter of the beacon frame of the neighboring access point and the TBTT.

In some embodiments, the discovery signal received by the ambient power station after associating with the ambient power access point is a power supply signal of the ambient power station after associating with the ambient power access point.

In some embodiments, a channel and/or frequency band used by the ambient power station to receive the discovery signal after associating with the ambient power access point is indicated by the ambient power access point through at least one of the following frames: a beacon frame, a probe response frame, a management frame, or a control frame.

In some embodiments, the communication unit mentioned above may be a communication interface or a transceiver, or an input/output interface of a communication chip or a system on chip. The processing unit mentioned above may be one or more processors.

It should be understood that the ambient power station 400 according to the embodiments of the present disclosure may correspond to the ambient power station in the method embodiments of the present disclosure, and the above-mentioned and other operations and/or functions of the unit in the ambient power station 400 are respectively for implementing the corresponding processes of the ambient power station in the method 200 shown in FIG. 4, which will not be repeated here for the sake of brevity.

FIG. 12 shows a schematic block diagram of an ambient power access point 500 according to embodiments of the present disclosure. As shown in FIG. 12, the ambient power access point 500 includes:
a communication unit 510 configured to transmit a discovery signal to an ambient power station on at least one channel that is preset.

In some embodiments, the discovery signal transmitted by the ambient power access point on the at least one channel carries at least one of:
a service set identifier (SSID) of the ambient power access point and primary channel information of a basic service set (BSS) corresponding to the ambient power access point.

In some embodiments, the discovery signal transmitted by the ambient power access point on the at least one channel carries a transmission parameter of a beacon frame of the ambient power access point.

In some embodiments, the transmission parameter of the beacon frame of the ambient power access point includes at least one of: a beacon interval, a target beacon transmission time (TBTT), and offset information in time domain between the discovery signal carrying the transmission parameter of the beacon frame of the ambient power access point and the TBTT.

In some embodiments, the ambient power station obtains power through the discovery signal received on the at least one channel.

In some embodiments, the at least one channel belongs to one or more frequency bands.

In some embodiments, a frequency band to which the at least one channel belongs is agreed upon by a protocol, and/or a frequency domain resource used by the ambient power station to receive the discovery signal on the at least one channel is agreed upon by a protocol.

In some embodiments, the communication unit 510 is specifically configured to:
transmit the discovery signal to the ambient power station on the at least one channel before the ambient power station associates with the ambient power access point.

In some embodiments, the discovery signal transmitted by the ambient power access point on the at least one channel carries first indication information;
where the first indication information is used to indicate information of a channel in which a power supply signal of the ambient power station is located, or the first indication information is used to indicate information of a channel set in which the power supply signal of the ambient power station is located, or the first indication information is used to indicate information of a frequency band in which the power supply signal of the ambient power station is located.

In some embodiments, in the case where the first indication information is used to indicate the information of the channel in which the power supply signal of the ambient power station is located, the channel in which the power supply signal of the ambient power station is located is the same as a channel used by the ambient power station for a communication; or
in the case where the first indication information is used to indicate the information of the channel set in which the power supply signal of the ambient power station is located, the channel set in which the power supply signal of the ambient power station is located includes a channel used by the ambient power station for a communication; or
in the case where the first indication information is used to indicate the information of the frequency band in which the power supply signal of the ambient power station is located, the frequency band in which the power supply signal of the ambient power station is located is the same as a frequency band used by the ambient power station for a communication.

In some embodiments, the power supply signal received by the ambient power station based on the first indication information carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the discovery signal transmitted by the ambient power access point on the at least one channel carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the second indication information is further used to indicate identification information of the target BSS.

In some embodiments, the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

In some embodiments, the beacon frame or the probe response frame received by the ambient power station on the primary channel of the target BSS carries first power supply information; where the first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element, where the radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

In some embodiments, after the ambient power station associates with the ambient power access point, the communication unit 510 is further configured to transmit a discovery signal to the ambien power station;
where the discovery signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

In some embodiments, the transmission parameter of the beacon frame of the neighboring access point includes at least one of: a beacon interval, a TBTT, and offset information in time domain between the discovery signal carrying the transmission parameter of the beacon frame of the neighboring access point and the TBTT.

In some embodiments, the discovery signal received by the ambient power station after associating with the ambient power access point is a power supply signal of the ambient power station after associating with the ambient power access point.

In some embodiments, a channel and/or frequency band used by the ambient power station to receive the discovery signal after associating with the ambient power access point is indicated by the ambient power access point through at least one of the following frames: a beacon frame, a probe response frame, a management frame, or a control frame.

In some embodiments, the communication unit mentioned above may be a communication interface or a transceiver, or an input/output interface of a communication chip or a system on chip. The processing unit mentioned above may be one or more processors.

It should be understood that the ambient power access point 500 according to the embodiments of the present disclosure may correspond to the ambient power access point in the method embodiments of the present disclosure, and the above-mentioned and other operations and/or functions of the unit in the ambient power access point 500 are respectively for implementing the corresponding processes of the ambient power access point in the method 200 shown in FIG. 4, which will not be repeated here for the sake of brevity.

FIG. 13 shows a schematic block diagram of an ambient power station 600 according to embodiments of the present disclosure. As shown in FIG. 13, the ambient power station 600 includes:
a communication unit 610 configured to receive a power supply signal on at least one channel that is preset.

In some embodiments, the power supply signal received on the at least one channel carries at least one of:
a service set identifier (SSID) of an ambient power access point and primary channel information of a basic service set (BSS) corresponding to the ambient power access point.

In some embodiments, the power supply signal received on the at least one channel carries a transmission parameter of a beacon frame of the ambient power access point.

In some embodiments, the transmission parameter of the beacon frame of the ambient power access point includes at least one of: a beacon interval, a target beacon transmission time (TBTT), and offset information in time domain between the power supply signal carrying the transmission parameter of the beacon frame of the ambient power access point and the TBTT.

In some embodiments, the power supply signal received by the ambient power station on the at least one channel is further used to discover the ambient power station.

In some embodiments, the at least one channel belongs to one or more frequency bands.

In some embodiments, a frequency band to which the at least one channel belongs is agreed upon by a protocol, and/or a frequency domain resource used by the ambient power station to receive the power supply signal on the at least one channel is agreed upon by a protocol.

In some embodiments, the communication unit 610 is specifically configured to:
receive the power supply signal on the at least one channel before associating with the ambient power access point.

In some embodiments, the power supply signal received by the ambient power station on the at least one channel carries first indication information;
where the first indication information is used to indicate information of a channel in which the power supply signal of the ambient power station is located, or the first indication information is used to indicate information of a channel set in which the power supply signal of the ambient power station is located, or the first indication information is used to indicate information of a frequency band in which the power supply signal of the ambient power station is located.

In some embodiments, in the case where the first indication information is used to indicate the information of the channel in which the power supply signal of the ambient power station is located, the channel in which the power supply signal of the ambient power station is located is the same as a channel used by the ambient power station for a communication; or
in the case where the first indication information is used to indicate the information of the channel set in which the power supply signal of the ambient power station is located, the channel set in which the power supply signal of the ambient power station is located includes a channel used by the ambient power station for a communication; or
in the case where the first indication information is used to indicate the information of the frequency band in which the power supply signal of the ambient power station is located, the frequency band in which the power supply signal of the ambient power station is located is the same as a frequency band used by the ambient power station for a communication.

In some embodiments, the power supply signal received by the ambient power station based on the first indication information carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the power supply signal received by the ambient power station on the at least one channel carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the second indication information is further used to indicate identification information of the target BSS.

In some embodiments, the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

In some embodiments, the beacon frame or the probe response frame received by the ambient power station on the primary channel of the target BSS carries first power supply information; where the first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element, where the radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

In some embodiments, after the ambient power station associates with the ambient power access point, the communication unit 610 is further configured to receive a power supply signal transmitted by the ambient power access point;
where the power supply signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

In some embodiments, the transmission parameter of the beacon frame of the neighboring access point includes at least one of: a beacon interval, a TBTT, and offset information in time domain between the power supply signal carrying the transmission parameter of the beacon frame of the neighboring access point and the TBTT.

In some embodiments, the power supply signal received by the ambient power station after associating with the ambient power access point is a discovery signal of the ambient power station after associating with the ambient power access point.

In some embodiments, a channel and/or frequency band used by the ambient power station to receive the power supply signal after associating with the ambient power access point is indicated by the ambient power access point through at least one of the following frames: a beacon frame, a probe response frame, a management frame, or a control frame.

In some embodiments, the communication unit mentioned above may be a communication interface or a transceiver, or an input/output interface of a communication chip or a system on chip. The processing unit mentioned above may be one or more processors.

It should be understood that the ambient power station 600 according to the embodiments of the present disclosure may correspond to the ambient power station in the method embodiments of the present disclosure, and the above-mentioned and other operations and/or functions of the unit in the ambient power station 600 are respectively for implementing the corresponding processes of the ambient power station in the method 300 shown in FIG. 10, which will not be repeated here for the sake of brevity.

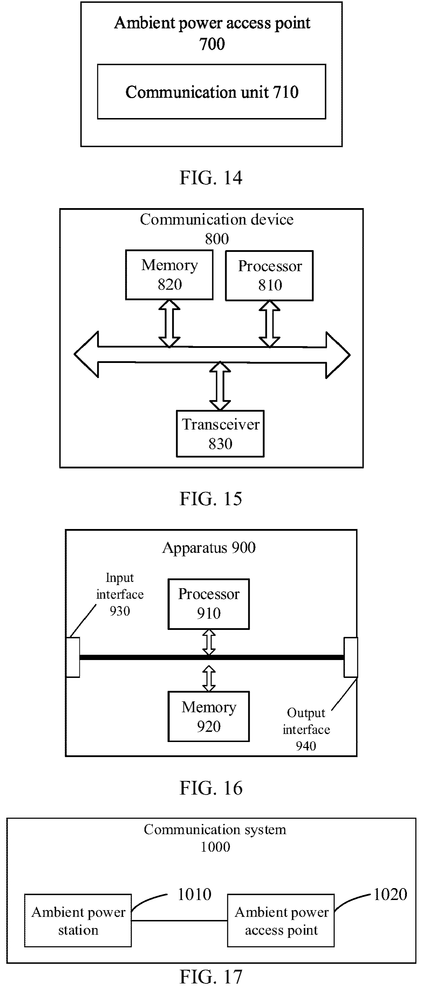

FIG. 14 shows a schematic block diagram of an ambient power access point 700 according to embodiments of the present disclosure. As shown in FIG. 14, the ambient power access point 700 includes:
a communication unit 710 configured to transmit a power supply signal to an ambient power station on at least one channel that is preset.

In some embodiments, the power supply signal transmitted by the ambient power access point on the at least one channel carries at least one of:
a service set identifier (SSID) of the ambient power access point and primary channel information of a basic service set (BSS) corresponding to the ambient power access point.

In some embodiments, the power supply signal transmitted by the ambient power access point on the at least one channel carries a transmission parameter of a beacon frame of the ambient power access point.

In some embodiments, the transmission parameter of the beacon frame of the ambient power access point includes at least one of: a beacon interval, a target beacon transmission time (TBTT), and offset information in time domain between the power supply signal carrying the transmission parameter of the beacon frame of the ambient power access point and the TBTT.

In some embodiments, the power supply signal transmitted by the ambient power access point on the at least one channel is further used to discover the ambient power station.

In some embodiments, the at least one channel belongs to one or more frequency bands.

In some embodiments, a frequency band to which the at least one channel belongs is agreed upon by a protocol, and/or a frequency domain resource used by the ambient power station to receive the power supply signal on the at least one channel is agreed upon by a protocol.

In some embodiments, the communication unit 710 is specifically configured to:
transmit the power supply signal to the ambient power station on the at least one channel before the ambient power station associates with the ambient power access point.

In some embodiments, the power supply signal transmitted by the ambient power access point on the at least one channel carries first indication information;
where the first indication information is used to indicate information of a channel in which the power supply signal of the ambient power station is located, or the first indication information is used to indicate information of a channel set in which the power supply signal of the ambient power station is located, or the first indication information is used to indicate information of a frequency band in which the power supply signal of the ambient power station is located.

In some embodiments, in the case where the first indication information is used to indicate the information of the channel in which the power supply signal of the ambient power station is located, the channel in which the power supply signal of the ambient power station is located is the same as a channel used by the ambient power station for a communication; or
in the case where the first indication information is used to indicate the information of the channel set in which the power supply signal of the ambient power station is located, the channel set in which the power supply signal of the ambient power station is located includes a channel used by the ambient power station for a communication; or
in the case where the first indication information is used to indicate the information of the frequency band in which the power supply signal of the ambient power station is located, the frequency band in which the power supply signal of the ambient power station is located is the same as a frequency band used by the ambient power station for a communication.

In some embodiments, the power supply signal received by the ambient power station based on the first indication information carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the power supply signal transmitted by the ambient power access point on the at least one channel carries second indication information; where
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

In some embodiments, the second indication information is further used to indicate identification information of the target BSS.

In some embodiments, the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

In some embodiments, the beacon frame or the probe response frame received by the ambient power station on the primary channel of the target BSS carries first power supply information; where the first power supply information is used to indicate a channel and/or a frequency band used by the ambient power station to receive the power supply signal after associating with the target BSS.

In some embodiments, the beacon frame or the probe response frame received by the ambient power station on the primary channel of the target BSS includes a radio frequency power source information element, where the radio frequency power source information element includes an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

In some embodiments, after the ambient power station associates with the ambient power access point, the communication unit 710 is further configured to transmit a power supply signal to the ambient power station;
where the power supply signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

In some embodiments, the transmission parameter of the beacon frame of the neighboring access point includes at least one of: a beacon interval, a TBTT, and offset information in time domain between the power supply signal carrying the transmission parameter of the beacon frame of the neighboring access point and the TBTT.

In some embodiments, the power supply signal received by the ambient power station after associating with the ambient power access point is a discovery signal of the ambient power station after associating with the ambient power access point.

In some embodiments, a channel and/or frequency band used by the ambient power station to receive the power supply signal after associating with the ambient power access point is indicated by the ambient power access point through at least one of the following frames: a beacon frame, a probe response frame, a management frame, or a control frame.

In some embodiments, the communication unit mentioned above may be a communication interface or a transceiver, or an input/output interface of a communication chip or a system on chip. The processing unit mentioned above may be one or more processors.

It should be understood that the ambient power access point 700 according to the embodiments of the present disclosure may correspond to the ambient power access point in the method embodiments of the present disclosure, and the above-mentioned and other operations and/or functions of the unit in the ambient power access point 700 are respectively for implementing the corresponding processes of the ambient power access point in the method 300 shown in FIG. 10, which will not be repeated here for the sake of brevity.

FIG. 15 is a schematic structural diagram of a communication device 800 provided in embodiments of the present disclosure. The communication device 800 shown in FIG. 15 includes a processor 810, and the processor 810 can call a computer program from a memory and run the computer program to implement the method in the embodiments of the present disclosure.

In some embodiments, as shown in FIG. 15, the communication device 800 may further include a memory 820. The processor 810 can call the computer program from the memory 820 and run the computer program to implement the method in the embodiments of the present disclosure.

The memory 820 may be a separate device independent of the processor 810, or may be integrated into the processor 810.

In some embodiments, as shown in FIG. 15, the communication device 800 may further include a transceiver 830. The processor 810 can control the transceiver 830 to communicate with other devices. Specifically, the processor 810 can control the transceiver 830 to transmit information or data to other devices, or to receive information or data transmitted by other devices.

The transceiver 830 may include a transmitter and a receiver. The transceiver 830 may further include antennas, and the number of the antennas may be one or more.

In some embodiments, the processor 810 may implement a function of the processing unit in the ambient power station, or the processor 810 may implement a function of the processing unit in the ambient power access point, which will not be described in detail here for the sake of brevity.

In some embodiments, the transceiver 830 may implement a function of the communication unit in the ambient power station, which will not be described in detail here for the sake of brevity.

In some embodiments, the transceiver 830 may implement a function of the communication unit in the ambient power access point, which will not be described in detail here for the sake of brevity.

In some embodiments, the communication device 800 may specifically be the ambient power access point in the embodiments of the present disclosure, and the communication device 800 may implement the corresponding processes implemented by the ambient power access point in each method in the embodiments of the present disclosure, which will not be described in detail here for the sake of brevity.

In some embodiments, the communication device 800 may specifically be the ambient power station in the embodiments of the present disclosure, and the communication device 800 may implement the corresponding processes implemented by the ambient power station in each method in the embodiment of the present disclosure, which will not be described in detail here for the sake of brevity.

FIG. 16 is a schematic structural diagram of an apparatus provided in embodiments of the present disclosure. The apparatus 900 shown in FIG. 16 includes a processor 910, and the processor 910 can call a computer program from a memory and run the computer program to implement the method in the embodiments of the present disclosure.

In some embodiments, as shown in FIG. 16, the apparatus 900 may further include a memory 920. The processor 910 can call the computer program from the memory 920 and run the computer program to implement the method in the embodiments of the present disclosure.

The memory 920 may be a separate device independent of the processor 910, or may be integrated into the processor 910.

In some embodiments, the processor 910 may implement a function of the processing unit in the ambient power station, or the processor 910 may implement a function of the processing unit in the ambient power access point, which will not be described in detail here for the sake of brevity.

In some embodiments, the apparatus 900 may further include an input interface 930. The processor 910 can control the input interface 930 to communicate with other devices or chips, and specifically, can control the input interface 930 to obtain information or data transmitted by other devices or chips. Optionally, the processor 910 may be located inside or outside a chip.

In some embodiments, the input interface 930 may implement a function of the communication unit in the ambient power station, or the input interface 930 may implement a function of the communication unit in the ambient power access point.

In some embodiments, the apparatus 900 may further include an output interface 940. The processor 910 can control the output interface 940 to communicate with other devices or chips, and specifically, can control the output interface 940 to output information or data to other devices or chips. Optionally, the processor 910 may be located inside or outside a chip.

In some embodiments, the output interface 940 may implement a function of the communication unit in the ambient power station, or the output interface 940 may implement a function of the communication unit in the ambient power access point.

In some embodiments, the apparatus may be applied to the ambient power access point in the embodiments of the present disclosure, and the device may implement the corresponding processes implemented by the ambient power access point in each method in the embodiments of the present disclosure, which will not be described in detail here for the sake of brevity.

In some embodiments, the apparatus may be applied to the ambient power station in the embodiments of the present disclosure, and the apparatus may implement the corresponding processes implemented by the ambient power station in each method in the embodiments of the present disclosure, which will not be described in detail here for the sake of brevity.

In some embodiments, the apparatus mentioned in the embodiments of the present disclosure may also be a chip. For example, the apparatus may be a system-on-chip, a system chip, a chip system, or a system-on-chip chip.

FIG. 17 is a schematic block diagram of a communication system 1000 provided in embodiments of the present disclosure. As shown in FIG. 17, the communication system 1000 includes an ambient power station 1010 and an ambient power access point 1020.

The ambient power station 1010 may be used to implement the corresponding functions implemented by the ambient power station in the above methods, and the ambient power access point 1020 may be used to implement the corresponding functions implemented by the ambient power access point in the above methods, which will not be described in detail here for the sake of brevity.

It should be understood that the processor in the embodiments of the present disclosure may be an integrated circuit chip with a capability for processing signals. In an implementation process, various steps of the method embodiments described above may be completed through an integrated logic circuit of hardware in a processor or instructions in a form of software. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement or perform various methods, steps, and logic block diagrams disclosed in the embodiments of the present disclosure. The general-purpose processor may be a microprocessor, or the processor may be any conventional processor. The steps of the methods disclosed in combination with the embodiments of the present disclosure may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It will be appreciated that the memory in the embodiments of the present disclosure may be a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which serves as an external cache. By way of example but not limited illustration, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memories in the system and method described herein are intended to include, but are not limited to, these and any other suitable types of memories.

It should be understood that the above memories are exemplary but are not limited illustration. For example, the memory in the embodiments of the present disclosure may also be a SRAM, a DRAM, an SDRAM, a DDR SDRAM, an ESDRAM, an SLDRAM, or a DR RAM. That is, the memories in the embodiments of the present disclosure are intended to include, but are not limited to, these and any other suitable types of memories.

The embodiments of the present disclosure further provide a computer-readable storage medium for storing a computer program.

In some embodiments, the computer-readable storage medium may be applied to the ambient power access point in the embodiments of the present disclosure, and the computer program enables a computer to perform the corresponding processes implemented by the ambient power access point in the various methods in the embodiments of the present disclosure, which will not be repeated here for the sake of brevity.

In some embodiments, the computer-readable storage medium may be applied to the ambient power station in the embodiments of the present disclosure, and the computer program enables the computer to perform the corresponding processes implemented by the ambient power station in the various methods in the embodiments of the present disclosure, which will not be repeated here for the sake of brevity.

The embodiments of the present disclosure further provide a computer program product, and the computer program product includes computer program instructions.

In some embodiments, the computer program product may be applied to the ambient power access point in the embodiments of the present disclosure, and the computer program instructions enable the computer to perform the corresponding processes implemented by the ambient power access point in the various methods in the embodiments of the present disclosure, which will not be repeated here for the sake of brevity.

In some embodiments, the computer program product may be applied to the ambient power station in the embodiments of the present disclosure, and the computer program instructions enable the computer to perform the corresponding processes implemented by the ambient power station in the various methods in the embodiments of the present disclosure, which will not be repeated here for the sake of brevity.

The embodiments of the present disclosure further provide a computer program.

In some embodiments, the computer program may be applied to the ambient power access point in the embodiments of the present disclosure. The computer program, when run on a computer, enables the computer to perform the corresponding processes implemented by the ambient power access point in the various methods in the embodiments of the present disclosure, which will not be repeated here for the sake of brevity.

In some embodiments, the computer program may be applied to the ambient power station in the embodiments of the present disclosure. The computer program, when run on a computer, enables the computer to perform the corresponding processes implemented by the ambient power station in the various methods in the embodiments of the present disclosure, which will not be repeated here for the sake of brevity.

Those ordinary skilled in the art will recognize that the units and algorithm steps of various examples described in combination with the embodiments disclosed herein can be implemented by electronic hardware, or a combination of computer software and electronic hardware. Whether these functions are performed in a form of hardware or software depends on a specific application and design constraints of the technical solution. Those skilled in the art may use different methods to implement the described functions for each specific application, but such implementation should not be considered to be beyond the scope of the present disclosure.

Those skilled in the art may clearly understand that, for convenience and brevity of description, specific working processes of the system, apparatus and unit as described above can refer to the corresponding processes in the aforementioned method embodiments, and details will not be repeated here.

In several embodiments provided in the present disclosure, it should be understood that the disclosed system, apparatus, and method may be implemented in other ways. For example, the apparatus embodiments described above are only illustrative. For example, the division of the units is only a logical function division, and there may be other division manners in actual implementation. For example, multiple units or components may be combined or integrated into another system, or some features may be ignored or not executed. In addition, coupling or direct coupling or communication connection shown or discussed between each other may be indirect coupling or communication connection via some interfaces, apparatuses, or units, which may be electrical, mechanical, or in other forms.

The units described as separate components may be or may not be physically separated, and the components shown as units may be or may not be physical units. That is, they may be located in one place or distributed over a plurality of network units. Some or all of the units may be selected according to actual needs to achieve the purpose of the solutions of the embodiments.

In addition, various functional units in various embodiments of the present disclosure may be integrated into one processing unit, or various units may physically exist separately, or two or more units may be integrated into one unit.

The functions, if implemented in a form of software functional units and sold or used as an independent product, may be stored in a computer-readable storage medium. With such understanding, the technical solutions of the present disclosure may be embodied in a form of a software product in essence, or a part of the technical solutions that contributes to the prior art or a part of the technical solutions may be embodied in the form of the software product. The computer software product is stored in one storage medium including a number of instructions for enabling a computer device (which may be a personal computer, a server, or a network device) to perform all or some of the steps of the methods described in various embodiments of the present disclosure. The aforementioned storage medium includes a U disk, a mobile hard disk, a read-only memory (ROM), a random access memory (RAM), a magnetic disk, an optical disk, or any medium capable of storing program codes.

The above descriptions are only specific implementations of the present disclosure, but the protection scope of the present disclosure is not limited thereto. Changes or replacements that any person skilled in the art could readily conceive of within the technical scope of the present disclosure shall be included in the protection scope of the present disclosure. Therefore, the protection scope of the present disclosure shall be subject to the protection scope of the claims.

## Claims

1. A wireless communication method, comprising:
receiving, by an ambient power station, a discovery signal on at least one channel that is preset.

2. The method according to claim 1, wherein
the discovery signal received on the at least one channel carries at least one of:
a service set identifier (SSID) of an ambient power access point and primary channel information of a basic service set (BSS) corresponding to the ambient power access point.

3. The method according to claim 1 or 2, wherein
the discovery signal received on the at least one channel carries a transmission parameter of a beacon frame of an ambient power access point.

4. The method according to claim 3, wherein
the transmission parameter of the beacon frame of the ambient power access point comprises at least one of: a beacon interval, a target beacon transmission time (TBTT), and offset information in time domain between the discovery signal carrying the transmission parameter of the beacon frame of the ambient power access point and the TBTT.

5. The method according to any one of claims 1 to 4, wherein
the ambient power station obtains power through the discovery signal received on the at least one channel.

6. The method according to any one of claims 1 to 5, wherein
the at least one channel belongs to one or more frequency bands.

7. The method according to any one of claims 1 to 6, wherein a frequency band to which the at least one channel belongs is agreed upon by a protocol, and/or a frequency domain resource used by the ambient power station to receive the discovery signal on the at least one channel is agreed upon by a protocol.

8. The method according to any one of claims 1 to 7, wherein
receiving, by the ambient power station, the discovery signal on the at least one channel that is preset, comprises:
receiving, by the ambient power station, the discovery signal on the at least one channel before associating with an ambient power access point.

9. The method according to any one of claims 1 to 8, wherein
the discovery signal received by the ambient power station on the at least one channel carries first indication information;
wherein the first indication information is used to indicate information of a channel in which a power supply signal of the ambient power station is located, or the first indication information is used to indicate information of a channel set in which the power supply signal of the ambient power station is located, or the first indication information is used to indicate information of a frequency band in which the power supply signal of the ambient power station is located.

10. The method according to claim 9, wherein
in the case where the first indication information is used to indicate the information of the channel in which the power supply signal of the ambient power station is located, the channel in which the power supply signal of the ambient power station is located is same as a channel used by the ambient power station for a communication; or
in the case where the first indication information is used to indicate the information of the channel set in which the power supply signal of the ambient power station is located, the channel set in which the power supply signal of the ambient power station is located comprises a channel used by the ambient power station for a communication; or
in the case where the first indication information is used to indicate the information of the frequency band in which the power supply signal of the ambient power station is located, the frequency band in which the power supply signal of the ambient power station is located is same as a frequency band used by the ambient power station for a communication.

11. The method according to claim 9 or 10, wherein
the power supply signal received by the ambient power station based on the first indication information carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

12. The method according to any one of claims 1 to 10, wherein
the discovery signal received by the ambient power station on the at least one channel carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

13. The method according to claim 11 or 12, wherein
the second indication information is further used to indicate identification information of the target BSS.

14. The method according to any one of claims 11 to 13, wherein
the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

15. The method according to claim 14, wherein the beacon frame or the probe response frame received by the ambient power station on the primary channel of the target BSS carries first power supply information; wherein the first power supply information is used to indicate a channel and/or a frequency band used by the ambient power station to receive the power supply signal after associating with the target BSS.

16. The method according to claim 15, wherein
the beacon frame or the probe response frame received by the ambient power station on the primary channel of the target BSS comprises a radio frequency power source information element, wherein the radio frequency power source information element comprises an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

17. The method according to any one of claims 1 to 16, wherein
after the ambient power station associates with an ambient power access point, the method further comprises:
receiving, by the ambient power station, a discovery signal transmitted by the ambient power access point;
wherein the discovery signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

18. The method according to claim 17, wherein
the transmission parameter of the beacon frame of the neighboring access point comprises at least one of: a beacon interval, a TBTT, and offset information in time domain between the discovery signal carrying the transmission parameter of the beacon frame of the neighboring access point and the TBTT.

19. The method according to claim 17 or 18, wherein
the discovery signal received by the ambient power station after associating with the ambient power access point is a power supply signal of the ambient power station after associating with the ambient power access point.

20. The method according to any one of claims 17 to 19, wherein
a channel and/or a frequency band used by the ambient power station to receive the discovery signal after associating with the ambient power access point is indicated by the ambient power access point through at least one of the following frames: a beacon frame, a probe response frame, a management frame, or a control frame.

21. A wireless communication method, comprising:
transmitting, by an ambient power access point, a discovery signal to an ambient power station on at least one channel that is preset.

22. The method according to claim 21, wherein
the discovery signal transmitted by the ambient power access point on the at least one channel carries at least one of:
a service set identifier (SSID) of the ambient power access point and primary channel information of a basic service set (BSS) corresponding to the ambient power access point.

23. The method according to claim 21 or 22, wherein the discovery signal transmitted by the ambient power access point on the at least one channel carries a transmission parameter of a beacon frame of the ambient power access point.

24. The method according to claim 23, wherein
the transmission parameter of the beacon frame of the ambient power access point comprises at least one of: a beacon interval, a target beacon transmission time (TBTT), and offset information in time domain between the discovery signal carrying the transmission parameter of the beacon frame of the ambient power access point and the TBTT.

25. The method according to any one of claims 21 to 24, wherein
the ambient power station obtains power through the discovery signal received on the at least one channel.

26. The method according to any one of claims 21 to 25, wherein
the at least one channel belongs to one or more frequency bands.

27. The method according to any one of claims 21 to 26, wherein a frequency band to which the at least one channel belongs is agreed upon by a protocol, and/or a frequency domain resource used by the ambient power station to receive the discovery signal on the at least one channel is agreed upon by a protocol.

28. The method according to any one of claims 21 to 27, wherein
transmitting, by the ambient power access point, the discovery signal to the ambient power station on the at least one channel that is preset, comprisrs:
transmitting, by the ambient power access point, the discovery signal to the ambient power station on the at least one channel before the ambient power station associates with the ambient power access point.

29. The method according to any one of claims 21 to 28, wherein
the discovery signal transmitted by the ambient power access point on the at least one channel carries first indication information;
wherein the first indication information is used to indicate information of a channel in which a power supply signal of the ambient power station is located, or the first indication information is used to indicate information of a channel set in which the power supply signal of the ambient power station is located, or the first indication information is used to indicate information of a frequency band in which the power supply signal of the ambient power station is located.

30. The method according to claim 29, wherein
in the case where the first indication information is used to indicate the information of the channel in which the power supply signal of the ambient power station is located, the channel in which the power supply signal of the ambient power station is located is same as a channel used by the ambient power station for a communication; or
in the case where the first indication information is used to indicate the information of the channel set in which the power supply signal of the ambient power station is located, the channel set in which the power supply signal of the ambient power station is located comprises a channel used by the ambient power station for a communication; or
in the case where the first indication information is used to indicate the information of the frequency band in which the power supply signal of the ambient power station is located, the frequency band in which the power supply signal of the ambient power station is located is same as a frequency band used by the ambient power station for a communication.

31. The method according to claim 29 or 30, wherein
the power supply signal received by the ambient power station based on the first indication information carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

32. The method according to any one of claims 21 to 30, wherein
the discovery signal transmitted by the ambient power access point on the at least one channel carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

33. The method according to claim 31 or 32, wherein
the second indication information is further used to indicate identification information of the target BSS.

34. The method according to any one of claims 31 to 33, wherein
the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

35. The method according to claim 34, wherein the beacon frame or the probe response frame received by the ambient power station on the primary channel of the target BSS carries first power supply information; wherein the first power supply information is used to indicate a channel and/or a frequency band used by the ambient power station to receive the power supply signal after associating with the target BSS.

36. The method according to claim 35, wherein
the beacon frame or the probe response frame received by the ambient power station on the primary channel of the target BSS comprises a radio frequency power source information element, wherein the radio frequency power source information element comprises an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

37. The method according to any one of claims 21 to 36, wherein
after the ambient power station associates with the ambient power access point, the method further comprises:
transmitting, by the ambient power access point, a discovery signal to the ambient power station;
wherein the discovery signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

38. The method according to claim 37, wherein
the transmission parameter of the beacon frame of the neighboring access point comprises at least one of: a beacon interval, a TBTT, and offset information in time domain between the discovery signal carrying the transmission parameter of the beacon frame of the neighboring access point and the TBTT.

39. The method according to claim 37 or 38, wherein
the discovery signal received by the ambient power station after associating with the ambient power access point is a power supply signal of the ambient power station after associating with the ambient power access point.

40. The method according to any one of claims 37 to 39, wherein
a channel and/or a frequency band used by the ambient power station to receive the discovery signal after associating with the ambient power access point is indicated by the ambient power access point through at least one of the following frames: a beacon frame, a probe response frame, a management frame, or a control frame.

41. A wireless communication method, comprising:
receiving, by an ambient power station, a power supply signal on at least one channel that is preset.

42. The method according to claim 41, wherein
the power supply signal received on the at least one channel carries at least one of:
a service set identifier (SSID) of an ambient power access point and primary channel information of a basic service set (BSS) corresponding to the ambient power access point.

43. The method according to claim 41 or 42, wherein
the power supply signal received on the at least one channel carries a transmission parameter of a beacon frame of an ambient power access point.

44. The method according to claim 43, wherein
the transmission parameter of the beacon frame of the ambient power access point comprises at least one of: a beacon interval, a target beacon transmission time (TBTT), and offset information in time domain between the power supply signal carrying the transmission parameter of the beacon frame of the ambient power access point and the TBTT.

45. The method according to any one of claims 41 to 44, wherein
the power supply signal received by the ambient power station on the at least one channel is further used to discover the ambient power station.

46. The method according to any one of claims 41 to 45, wherein
the at least one channel belongs to one or more frequency bands.

47. The method according to any one of claims 41 to 46, wherein a frequency band to which the at least one channel belongs is agreed upon by a protocol, and/or a frequency domain resource used by the ambient power station to receive the power supply signal on the at least one channel is agreed upon by a protocol.

48. The method according to any one of claims 41 to 47, wherein
receiving, by the ambient power station, the power supply signal on the at least one channel that is preset, comprisrs:
receiving, by the ambient power station, the power supply signal on the at least one channel before associating an the ambient power access point.

49. The method according to any one of claims 41 to 48, wherein
the power supply signal received by the ambient power station on the at least one channel carries first indication information;
wherein the first indication information is used to indicate information of a channel in which the power supply signal of the ambient power station is located, or the first indication information is used to indicate information of a channel set in which the power supply signal of the ambient power station is located, or the first indication information is used to indicate information of a frequency band in which the power supply signal of the ambient power station is located.

50. The method according to claim 49, wherein
in the case where the first indication information is used to indicate the information of the channel in which the power supply signal of the ambient power station is located, the channel in which the power supply signal of the ambient power station is located is same as a channel used by the ambient power station for a communication; or
in the case where the first indication information is used to indicate the information of the channel set in which the power supply signal of the ambient power station is located, the channel set in which the power supply signal of the ambient power station is located comprises a channel used by the ambient power station for a communication; or
in the case where the first indication information is used to indicate the information of the frequency band in which the power supply signal of the ambient power station is located, the frequency band in which the power supply signal of the ambient power station is located is same as a frequency band used by the ambient power station for a communication.

51. The method according to claim 49 or 50, wherein
the power supply signal received by the ambient power station based on the first indication information carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

52. The method according to any one of claims 41 to 50, wherein
the power supply signal received by the ambient power station on the at least one channel carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

53. The method according to claim 51 or 52, wherein
the second indication information is further used to indicate identification information of the target BSS.

54. The method according to any one of claims 51 to 53, wherein
the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

55. The method according to claim 54, wherein the beacon frame or the probe response frame received by the ambient power station on the primary channel of the target BSS carries first power supply information; wherein the first power supply information is used to indicate a channel and/or a frequency band used by the ambient power station to receive the power supply signal after associating with the target BSS.

56. The method according to claim 55, wherein
the beacon frame or the probe response frame received by the ambient power station on the primary channel of the target BSS comprises a radio frequency power source information element, wherein the radio frequency power source information element comprises an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

57. The method according to any one of claims 41 to 56, wherein
after the ambient power station associates with an ambient power access point, the method further comprises:
receiving, by the ambient power station, a power supply signal transmitted by the ambient power access point;
wherein the power supply signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

58. The method according to claim 57, wherein
the transmission parameter of the beacon frame of the neighboring access point comprises at least one of: a beacon interval, a TBTT, and offset information in time domain between the power supply signal carrying the transmission parameter of the beacon frame of the neighboring access point and the TBTT.

59. The method according to claim 57 or 58, wherein
the power supply signal received by the ambient power station after associating with the ambient power access point is a discovery signal of the ambient power station after associating with the ambient power access point.

60. The method according to any one of claims 57 to 59, wherein
a channel and/or a frequency band used by the ambient power station to receive the power supply signal after associating with the ambient power access point is indicated by the ambient power access point through at least one of the following frames: a beacon frame, a probe response frame, a management frame, or a control frame.

61. A wireless communication method, comprising:
transmitting, by an ambient power access point, a power supply signal to an ambient power station on at least one channel that is preset.

62. The method according to claim 61, wherein
the power supply signal transmitted by the ambient power access point on the at least one channel carries at least one of:
a service set identifier (SSID) of the ambient power access point and primary channel information of a basic service set (BSS) corresponding to the ambient power access point.

63. The method according to claim 61 or 62, wherein the power supply signal transmitted by the ambient power access point on the at least one channel carries a transmission parameter of a beacon frame of the ambient power access point.

64. The method according to claim 63, wherein
the transmission parameter of the beacon frame of the ambient power access point comprises at least one of: a beacon interval, a target beacon transmission time (TBTT), and offset information in time domain between the power supply signal carrying the transmission parameter of the beacon frame of the ambient power access point and the TBTT.

65. The method according to any one of claims 61 to 64, wherein
the power supply signal transmitted by the ambient power access point on the at least one channel is further used to discover the ambient power station.

66. The method according to any one of claims 61 to 65, wherein
the at least one channel belongs to one or more frequency bands.

67. The method according to any one of claims 61 to 66, wherein a frequency band to which the at least one channel belongs is agreed upon by a protocol, and/or a frequency domain resource used by the ambient power station to receive the power supply signal on the at least one channel is agreed upon by a protocol.

68. The method according to any one of claims 61 to 67, wherein
transmitting, by the ambient power access point, the power supply signal to the ambient power station on the at least one channel that is preset, comprisrs:
transmitting, by the ambient power access point, the power supply signal to the ambient power station on the at least one channel before the ambient power station associates with the ambient power access point.

69. The method according to any one of claims 61 to 68, wherein
the power supply signal transmitted by the ambient power access point on the at least one channel carries first indication information;
wherein the first indication information is used to indicate information of a channel in which the power supply signal of the ambient power station is located, or the first indication information is used to indicate information of a channel set in which the power supply signal of the ambient power station is located, or the first indication information is used to indicate information of a frequency band in which the power supply signal of the ambient power station is located.

70. The method according to claim 69, wherein
in the case where the first indication information is used to indicate the information of the channel in which the power supply signal of the ambient power station is located, the channel in which the power supply signal of the ambient power station is located is same as a channel used by the ambient power station for a communication; or
in the case where the first indication information is used to indicate the information of the channel set in which the power supply signal of the ambient power station is located, the channel set in which the power supply signal of the ambient power station is located comprises a channel used by the ambient power station for a communication; or
in the case where the first indication information is used to indicate the information of the frequency band in which the power supply signal of the ambient power station is located, the frequency band in which the power supply signal of the ambient power station is located is same as a frequency band used by the ambient power station for a communication.

71. The method according to claim 69 or 70, wherein
the power supply signal received by the ambient power station based on the first indication information carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

72. The method according to any one of claims 61 to 70, wherein
the power supply signal transmitted by the ambient power access point on the at least one channel carries second indication information; wherein
the second indication information is used to indicate a channel number of a primary channel of a target BSS, and/or the second indication information is used to indicate a number of a frequency band in which the primary channel of the target BSS is located; or
the second indication information is used to indicate a number of a channel in a channel set of the target BSS, and/or the second indication information is used to indicate a number of a frequency band in which the channel in the channel set of the target BSS is located.

73. The method according to claim 71 or 72, wherein
the second indication information is further used to indicate identification information of the target BSS.

74. The method according to any one of claims 71 to 73, wherein
the primary channel of the target BSS is used by the ambient power station to receive a beacon frame; and/or the primary channel of the target BSS is used by the ambient power station to transmit a probe request frame; and/or the primary channel of the target BSS is used by the ambient power station to receive a probe response frame.

75. The method according to claim 74, wherein the beacon frame or the probe response frame received by the ambient power station on the primary channel of the target BSS carries first power supply information; wherein the first power supply information is used to indicate a channel and/or a frequency band used by the ambient power station to receive the power supply signal after associating with the target BSS.

76. The method according to claim 75, wherein
the beacon frame or the probe response frame received by the ambient power station on the primary channel of the target BSS comprises a radio frequency power source information element, wherein the radio frequency power source information element comprises an operating class field and a channel field, the operating class field is used to indicate the frequency band used by the ambient power station to receive the power supply signal after associating with the target BSS, and the channel field is used to indicate the channel used by the ambient power station to receive the power supply signal after associating with the target BSS.

77. The method according to any one of claims 61 to 76, wherein
after the ambient power station associates with the ambient power access point, the method further comprises:
transmitting, by the ambient power access point, a power supply signal to the ambient power station;
wherein the power supply signal received by the ambient power station after associating with the ambient power access point carries at least one of:
a SSID of a neighboring access point, primary channel information of a BSS corresponding to the neighboring access point, and a transmission parameter of a beacon frame of the neighboring access point.

78. The method according to claim 77, wherein
the transmission parameter of the beacon frame of the neighboring access point comprises at least one of: a beacon interval, a TBTT, and offset information in time domain between the power supply signal carrying the transmission parameter of the beacon frame of the neighboring access point and the TBTT.

79. The method according to claim 77 or 78, wherein
the power supply signal received by the ambient power station after associating with the ambient power access point is a discovery signal of the ambient power station after associating with the ambient power access point.

80. The method according to any one of claims 77 to 79, wherein
a channel and/or a frequency band used by the ambient power station to receive the power supply signal after associating with the ambient power access point is indicated by the ambient power access point through at least one of the following frames: a beacon frame, a probe response frame, a management frame, or a control frame.

81. An ambient power station, comprising:
a communication unit, configured to receive a discovery signal on at least one channel that is preset.

82. An ambient power access point, comprising:
a communication unit, configured to transmit a discovery signal to an ambient power station on at least one channel that is preset.

83. An ambient power station, comprising:
a communication unit, configured to receive a power supply signal on at least one channel that is preset.

84. An ambient power access point, comprising:
a communication unit, configured to transmit a power supply signal to an ambient power station on at least one channel that is preset.

85. An ambient power station, comprising: a processor and a memory, wherein the memory is configured to store a computer program, and the processor is configured to call the computer program stored in the memory and run the computer program, to enable the ambient power station to perform the method according to any one of claims 1 to 20.

86. An ambient power access point, comprising: a processor and a memory, wherein the memory is configured to store a computer program, and the processor is configured to call the computer program stored in the memory and run the computer program, to enable the ambient power access point to perform the method according to any one of claims 21 to 40.

87. An ambient power station, comprising: a processor and a memory, wherein the memory is configured to store a computer program, and the processor is configured to call the computer program stored in the memory and run the computer program, to enable the ambient power station to perform the method according to any one of claims 41 to 60.

88. An ambient power access point, comprising: a processor and a memory, wherein the memory is configured to store a computer program, and the processor is configured to call the computer program stored in the memory and run the computer program, to enable the ambient power access point to perform the method according to any one of claims 61 to 80.

89. A chip, comprising: a processor, configured to call a computer program from a memory and run the computer program to enable a device equipped with the chip to perform the method according to any one of claims 1 to 20, or enable the device equipped with the chip to perform the method according to any one of claims 21 to 40, or enable the device equipped with the chip to perform the method according to any one of claims 41 to 60, or enable the device equipped with the chip to perform the method according to any one of claims 61 to 80.

90. A computer-readable storage medium, configured to store a computer program, whrein when the computer program is executed, the method according to any one of claims 1 to 20 is implemented, or the method according to any one of claims 21 to 40 is implemented, or the method according to any one of claims 41 to 60 is implemented, or the method according to any one of claims 61 to 80 is implemented.

91. A computer program product, comprising computer program instructions, wherein when the computer program instructions are executed, the method according to any one of claims 1 to 20 is implemented, or the method according to any one of claims 21 to 40 is implemented, or the method according to any one of claims 41 to 60 is implemented, or the method according to any one of claims 61 to 80 is implemented.

92. A computer program, wherein when the computer program is executed, the method according to any one of claims 1 to 20 is implemented, or the method according to any one of claims 21 to 40 is implemented, or the method according to any one of claims 41 to 60 is implemented, or the method according to any one of claims 61 to 80 is implemented.
